# EUROPÄISCHE PATENTANMELDUNG

(11) **EP 1 522 271 A2**
(43) Veröffentlichungstag der Anmeldung: **13.04.2005**
(21) Anmeldenummer: 05000771.5
(22) Anmeldetag: 28.07.1999
(51) Int. Cl.: A61C 8/00

(54) **Vorrichtung zum Halten und/oder Bilden eines Zahnersatzes**

(30) Priorität: 29.07.1998 CH 159398
(62) Teilanmeldung aus: 99932591.3
(71) Anmelder: Sutter, Franz, 4435 Niederdorf (CH)
(72) Erfinder: Sutter, Franz, 4435 Niederdorf (CH)
(74) Vertreter: Eder, Carl E.

(57) **Zusammenfassung**

Die Vorrichtung (75) zum Halten und/oder Bilden eines Zahnersatzes besitzt ein Implantat (1) mit einer Achse (3) und einem metallischen Grundkörper (50), der ein axiales Loch (35) hat. Ein keramischer Körper (90) ist mit einem am Bolzen (80) oder einer Schraube am Implantat (1) befestigt. Der keramische Körper (90) sitzt mindestens annähernd radial spielfrei auf dem Implantat (1) oder in dessen Loch (35) und liegt zum Beispiel auf einer konischen Schulterfläche des Implantats (1) auf oder sitzt mit einem konischen Abschnitt (291) in einem konischen Abschnitt (267) des Lochs (35) des Implantats (1) oder hat einen zylindrischen Lochabschnitt, der einen Endabschnitt des Implantats übergreift. Der keramische Körper (90) kann nötigenfalls nach dem Einsetzen in den Mund eines Patienten noch beschliffen werden und dient zum Eingreifen in eine Krone oder eine Brücke oder eine Prothese mit mehreren künstlichen Zähnen.

## Beschreibung

Die Erfindung betrifft eine Vorrichtung zum Halten und/oder Bilden eines Zahnersatzes gemäss dem Oberbegriff des Anspruchs 1.

Beim Zahnersatz kann es sich zum Beispiel um einen künstlichen Einzelzahn, eine Brücke oder eine mehrere Zähne aufweisende Prothese handeln.

Zahlreiche bekannte Vorrichtungen zur Bildung eines Zahnersatzes besitzen ein in einen Knochen implantierbares, aus Titan oder einer Titanlegierung bestehendes Implantat und ein im Bereich des Weichgewebes und/oder knapp oberhalb von diesem auf dem Implantat aufliegendes Aufbauelement. Ein Implantat mit einer an das Weichgewebe angrenzenden, metallischen Fläche verursacht jedoch manchmal Reizungen und Entzündungen des Weichgewebes. Das Aufbauelement besteht manchmal aus Gold oder einer Goldlegierung. Wenn Teile mit aus verschiedenen metallischen Materialien bestehenden Aussenflächen im Bereich des Weichgewebes oder in der Mundhöhle aneinanderstossen, können diese zusammen mit dem Säure enthaltenden Speichel und/oder der Gewebeflüssigkeit als galvanisches Element wirken, einen elektrischen Strom erzeugen und zusätzliche Reizungen verursachen.

Bekannte Vorrichtungen haben häufig einen konischen oder zylindrischen, aus Titan oder einer Titanlegierung bestehen, aus dem Implantat herausragenden Pfeiler, auf den eine Krone oder ein anderer Teil eines Aufbauelements aufgebaut wird. Die WO 98/02110 A offenbart zum Beispiel verschiedene künstliche Zähne mit je einem Implantat, einem als "Abutment" bezeichneten Bolzen und einer Krone. Der Bolzen hat einen in ein Loch des Implantats hineinragenden Schaft und einen sich ausserhalb des Implantats befindenden, auf einer ebenen Ringfläche des Implantats aufliegenden Konus, der einen Kopf oder Pfeiler bildet. Die Krone liegt auf dem Konus des Bolzens sowie auf einem konischen oder zylindrischen Abschnitt des Implantats auf. Bei diesen künstlichen Zähnen besteht die Krone aus Keramik und/oder Metall, während das Implantat und der zum Halten der Krone dienende, in diese hineinragende Bolzen ("Abutment") aus Metall bestehen, wobei das Implantat eventuell eine Beschichtung aus Hydroxylapatatit aufweisen kann. Nach dem Einsetzen eines solchen künstlichen Zahnes in den Mund eines Patienten kann daher höchstens noch die allenfalls aus Keramik bestehende Krone beschliffen werden. Dagegen können der Bolzen oder das Implantat nicht bereits vor dem Anbringen der Krone beschliffen werden, da keine metallischen Späne in den Mund des Patienten gelangen sollten. Dies schränkt die Möglichkeit zur Anpassung der Form des künstlichen Zahns an die Formen und Abmessungen der benachbarten Zähne stark ein. Zudem können Teile des metallischen Implantats unter Umständen in Kontakt mit dem Weichgewebe im Mund des Patienten gelangen und dadurch eine starke Anlagerung von Plaque am Implantat verursachen. Ferner können eventuell Teile des metallischen Implantats bei geöffnetem Mund des Patienten von aussen sichtbar sein. Wenn eine Porzellankrone auf einen metallischen Pfeiler aufgebracht wird, schimmert der Pfeiler zudem häufig durch die Porzellankrone hindurch und verursacht einen ästhetisch störenden, matten Farbton der Porzellankrone. Es wäre zudem schwierig und praktisch kaum möglich, einen dauerhaften, gemäss der WO 98/02 110 A ausgebildeten Zahnersatz mit einer vollständig aus Keramik bestehenden Krone herzustellen. Des Weiteren offenbart die WO/02110 A keine Möglichkeit, um den Bolzen in einer definierten Drehstellung oder in ein einer von mehreren möglichen definierten Drehstellungen wählbaren Drehstellung am Implantat zu befestigen, wie es für gewisse Verwendungen wünschenswert ist.

Es ist zur Vermeidung von Reizungen des Weichgewebes bekannt, zum Halten einer Krone oder eines anderen Aufbauelements dienenden Vorrichtungen im Bereich des Weichgewebes mit einem keramischen Körper zu versehen. Die US 5 310 343 A offenbart zum Beispiel Vorrichtungen mit einem metallischen Grundkörper und einem mit diesem verschraubbaren metallischen Bolzen. Der Grundkörper und der Bolzen haben im Querschnitt von keramischem Material umschlossene Abschnitte. Bei diesen bekannten Vorrichtungen ist zwischen dem am Grundkörper angeordneten, keramischen Material und dem am Bolzen angeordneten keramischen Material ein metallischer Bund des Bolzens vorhanden. Dieser metallische Bund kann höchstwahrscheinlich auch bei einem fertigen Zahnersatz, d.h. wenn zum Beispiel eine Krone an der Vorrichtung befestigt ist, in Kontakt mit dem Weichgewebe gelangen und eventuell von aussen sichtbar sein und daher die durch das keramische Material angestrebten Wirkungen beeinträchtigen. Ferner kann das keramische Material nicht zusammenhängend vom Höhenbereich des Bolzens bis zum Höhenbereich des Grundkörpers beschliffen werden, ohne auch den metallischen Bund zu beschleifen. Wie schon erwähnt sollten jedoch keine metallischen Teile innerhalb des Mundes eines Patienten beschliffen werden, weil dabei Metallspäne in den Mund des Patienten gelangen. Der Bolzen hat an seinem aus dem Grundkörper herausragenden Ende einen metallischen, bei der Endfläche nicht von keramischem Material bedeckten Endabschnitt mit einem Sechskantloch. Dies kann für gewisse Anwendungen störend sein, weil es manchmal wünschenswert wäre, das am Bolzen befestigte, keramische Material zur optimalen Anpassung der Form an die individuelle Situation auch im zentralen Bereich zu beschleifen. Wenn nach dem Einsetzen der Vorrichtung in den Mund eines Patienten ein Abdruck der Vorrichtung und der dieser benachbarten Zähne gemacht wird, kann das Sechskantloch zudem die Abdrucknahme aufwendiger und komplizierter machen, weil das Loch eventuell zuerst verschlossen werden muss. Bei den aus der US 5 310 343 bekannten Vorrichtungen haben das Loch des Grundkörpers sowie der Bolzen konische, ineinander steckende Abschnitte. Ferner bilden der Grundkörper und das an diesem angebrachte, keramische Material zusammen eine ebene Ringfläche, die bei zusammengebauter Vorrichtung einer ebene Ringfläche des Bundes zugewandt ist. Wegen der Fabrikationsungenauigkeiten können jedoch entweder nur die konischen Flächen des Grundkörper-Lochs und Bolzens oder nur die genannten ebenen Ringflächen spaltfrei aufeinander aufliegen. Wenn die konischen Abschnitte nicht spaltfrei aufeinander aufliegen, können der obere Bolzenabschnitt, das an diesem angeordnete, keramische Material und ein auf diesem aufgebauter Aufbau bezüglich des Grundkörpers quer zu dessen Achse gerichtete Mikrobewegungen ausführen. Wenn hingegen zwischen den Ringflächen ein Spalt vorhanden ist, können Mikroorganismen in diesen eindringen. Sowohl die erwähnten Mikrobewegungen als auch eindringende Mikroorganismen können die dauerhafte Befestigung der Vorrichtung im Mund eines Patienten gefährden.

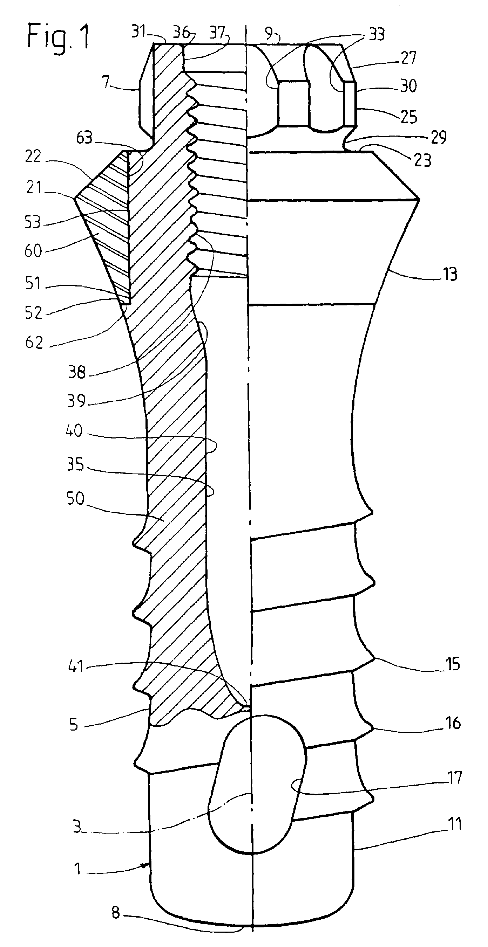

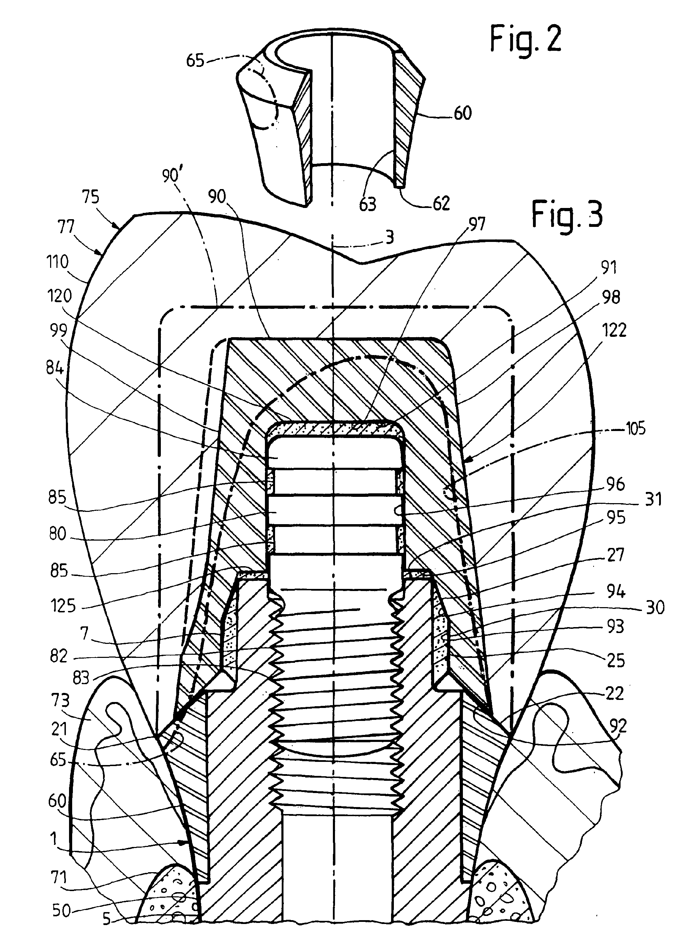

Die FR 2 745 998 A offenbart Vorrichtungen mit einem metallischen Implantat, einem ringförmigen Keramik-Körper und einer Suprakonstruktion. Das Implantat hat ein axiales Loch mit einem Innengewinde und einem konischen Lochabschnitt. Der Keramik-Körper hat einen ungefähr zylindrischen Hauptabschnitt und einen von diesem weg nach unten vorstehenden konischen Abschnitt, der bei zusammengebauter Vorrichtung in den konischen Lochabschnitt des Implantats hineinragt. Bei der in Fig. 1 ersichtlichen Vorrichtung besteht die Suprakonstruktion aus einem einstückigen Bolzen, der einen Schaft mit einem in das Innengewinde des Implantats einschraubbaren Aussengewinde und einen Oberteil mit einem sechseckförmigen Abschnitt sowie einem sich nach oben verjüngenden Endabschnitt zum Halten eines Aufbauelements hat. Bei zusammengebauter Vorrichtung ragt der Bolzen mit einem konischen Abschnitt in einen konischen Lochabschnitt des Keramik-Körpers hinein und drückt den Keramik-Körper gegen das Implantat. Bei der in Fig. 2 dargestellten Vorrichtung ist der einstückige Bolzen durch zwei separate Teile, nämlich eine Hülse und eine Schraube, ersetzt. Die Hülse hat einen konischen Abschnitt der bei zusammengebauter Vorrichtung in einen konischen Lochabschnitt des Keramik-Körpers hineinragt. Bei zusammengebauter Vorrichtung drückt der Kopf der Schraube die metallische Hülse gegen den Keramik-Ring, der dadurch gegen das Implantat gedrückt wird. Der konische Abschnitt der metallischen Hülse hat zwei Nocken, die in Ausnehmungen des konischen Lochabschnitts des Keramik-Körpers eingreifen. Der konische Abschnitt des letzteren hat ebenfalls zwei Nocken, die in Ausnehmungen des konischen Lochabschnitts des Implantats eingreifen. Bei beiden in den Zeichnungen der FR 2 745 998 A dargestellten Vorrichtungen besteht der oberste, sich nach oben verjüngende Teil der Suprakonstruktion - d.h. der obere Endabschnitt des Bolzens bzw. die separate Hülse - aus Metall und kann daher nicht im Mund des Patienten beschliffen werden, ohne dass Metallspäne in den Mund des Patienten gelangen. Wenn eine Porzellankrone auf den sich nach oben verjüngenden Teil der Suprakonstruktion aufgebracht wird, kann dieser metallische Teil zudem durch die Krone hindurchschimmern und ästhetisch störend sein. Da das Implantat und der Keramik-Körper sowie der letztere und der Oberteil des Bolzens (Fig. 1) bzw. die metallische Hülse (Fig. 2) einander zugewandte, ebene Ringflächen haben, liegen zudem normalerweise bei beiden in der FR 2 745 998 A offenbarten Vorrichtungen analog wie bei den aus der US 5 310 343 A bekannten Vorrichtungen entweder nur die konischen Flächen oder nur die ebenen Ringflächen der aufeinanderfolgenden Teile spaltfrei aufeinander auf, was zu analogen Nachteilen wie bei der US 5 310 343 A führt. Die aus der FR 2 745 998 bekannten Vorrichtungen haben des Weiteren noch den Nachteil, dass die Anordnung eines Keramik-Körpers zwischen dem oberen Ende des Implantats und dem zum Eingreifen in ein Aufbauelement, z. B. eine Krone, bestimmten, sich nach oben verjüngenden Teil der Suprakonstruktion einem relativ langen Helelarm zwischen dem oberen Ende des Implantats und dem in ein Aufbauelement eingreifenden Teil ergibt. Insbesondere wenn ungefähr quer zum Implantat gerichtete Kräfte auf das Aufbauelement einwirken, beeinträchtigt der genannte Hebelarm die Stabilität der Verbindung eines Aufbauelements mit dem Implantat. Ferner bildet der zum Halten eines Aufbauelements bestimmten Teil der Suprakonstruktion bis zu seinem unteren Ende einen ziemlich kleinen Winkel mit der Achse des Implantats und der Suprakonstruktion. Wenn eine Krone am unteren Ende einigermassen glatt an den auf sie folgenden Abschnitt der Vorrichtung anschliessen soll, muss die Krone dort in einen sehr dünnen Rand auslaufen, der leicht ausbricht.

Der Erfindung liegt die Aufgabe zugrunde, Nachteile der bekannten Vorrichtungen zu vermeiden und insbesondere eine Vorrichtung zu schaffen, die nach dem Einsetzen in einen Mund eines Patienten eine schnelle und einfache Abdrucknahme bzw. Abformung ermöglicht und deren aus dem Knochen herausragenden Teile problemlos soweit als erwünscht innerhalb vom Mund des Patienten beschliffen werden können. Die Vorrichtung soll ferner vorzugsweise ermöglichen, dass keine Mikroorganismen zwischen dem Grundkörper des Implantats und dem an diesem befestigten, keramischen Körper eindringen können und dass der am Implantat befestigbare, keramische Körper im befestigten Zustand sehr stabil mit dem metallischen Grundkörper verbunden ist, so dass dieser keramische Körper auch unter der Einwirkung von grossen, ungefähr quer zur Achse des Grundkörpers einwirkenden Kräften möglichst keine Bewegungen gegenüber dem Grundkörper ausführt. Ferner soll die Vorrichtung bei der Bildung eines Zahnersatzes im Mund eines Patienten aus möglichst wenig separaten Teilen zusammensetzbar sein.

Diese Aufgabe wird ausgehend von der FR 2 745 998 A durch eine Vorrichtung gelöst, die gemäss der Erfindung die Merkmale des Anspruchs 1 aufweist.

Vorteilhafte Ausgestaltungen der Vorrichtung gehen aus den abhängigen Ansprüchen hervor.

Die Vorrichtung ermöglicht eine starre, stabile und dauerhafte Verbindung des mit einem Bolzen oder einer Schraube befestigbaren, keramischen Körpers mit dem metallischen Grundkörper. Ferner muss ein Zahnarzt für die Bildung eines Zahnersatzes im Mund eines Patienten nur wenig separate Teile zusammensetzen.

Die erfindungsgemässe Ausbildung der Vorrichtung ermöglicht nach dem Einsetzen der Vorrichtung in einen Mund eines Patienten eine schnelle und einfache Abdrucknahme, d.h. Abformung der aus dem Knochen herausragenden und das Weichgewebe durchdringenden Teile der Vorrichtung. Wenn das Loch des am Implantat befestigbaren, keramischen Körpers als Sacklch ausgebildet und dieser keramische Körper mit einem in dessen Sackloch hineinragenden Bolzen am Implantat befestigt wird, ist es insbesondere nicht nötig, für die Abdrucknahme irgend ein Loch des am Bolzen befestigten, keramischen Körpers und/oder des Bolzens selbst vorübergehend abzudecken. Ferner kann nötigenfalls auch der zentrale, das aus dem Grundkörper herausragende Bolzenende bedeckende Abschnitt des am Bolzen befestigten, keramischen Körpers im Mundbereich des Patienten beschliffen werden.

Bei einer vorteilhaften Ausgestaltung der Vorrichtung hat der metallischen Grundkörper einen axialen, im Querschnitt von keramischem Material umschlossenen Abschnitt. Dieses keramische Material besteht beispielsweise aus einem ursprünglich separaten, keramischen Körper. Der das genannte keramische Material bildende, allenfalls am Grundkörper befestigte keramische Körper und der mit einem Bolzen am Implantat befestigbare, keramische Körper sind beispielsweise durch ein Bindemittel direkt mit dem Grundkörper bzw. dem Bolzen verbunden. Das Bindemittel kann abhängig von der Ausbildung der miteinander zu verbindenden Teile aus einem dünnflüssigen, in einer dünnen Schicht auftragbaren Klebstoff oder aus einem relativ viskosen Klebstoff bzw. Zement bestehen, der zum Ausfüllen mindestens eines relativ grossen Zwischenraums geeignet ist. Der Klebstoff und/oder Zement kann beim Verbinden der Teile beispielsweise bei normaler Raumtemperatur aushärten oder zum Aushärten erwärmt werden. Der bzw. jeder keramische Körper kann möglicherweise statt durch einen Klebestoff bzw. Zement durch eine Hartlöt-Verbindung mit dem metallischen Grundkörper bzw. Bolzen verbunden sein. In diesem Fall besteht das Bindemittel dann aus einem Hartlot, das beim Verbinden des keramischen Körpers mit dem metallischen Grundkörper oder Bolzen vorübergehend erhitzt und geschmolzen wird. Das Bindemittel soll in allen Fällen biokompatibel, nicht toxisch und gut mit dem Knochen und Weichgewebe von Patienten verträglich sein. Der keramische Körper kann ferner zusammen mit dem Grundkörper oder dem Bolzen einen Press-Sitz bilden und statt durch ein Bindemittel oder zusätzlich zu einem solchen durch eine Press-Verbindung mit dem Grundkörper bzw. Bolzen verbunden sein.

Der bzw. jeder keramische Körper kann separat - d.h. vom Grundkörper und allfälligen Bolzen getrennt - beispielsweise aus einer Teilchen aufweisenden, plastisch verformbaren, mehr oder weniger gut fliessfähigen Masse mit Hilfe einer Gussform oder dergleichen derart geformt werden, dass er mindestens im Wesentlichen rotationssymmetrisch zu einer Achse ist. Der geformte Körper wird dann, bevor er mit dem metallischen Grundkörper bzw. mit dem eventuell vorhandenen Bolzen verbunden wird, in üblicher Weise erhitzt und versintert. Wenn zwei keramische Körper vorhanden sind, kann einer oder jeder von diesen bei seiner Verwendung zur Bildung eines Zahnersatzes nötigenfalls noch im Mund eines Patienten stellenweise von einem Zahnarzt beschliffen und dadurch bei der Herstellung eines Aufbauelements bzw. einer Suprakonstruktion individuell geformt werden.

Das vorzugsweise unmittelbar am Grundkörper befestigte, keramische Material oder mindestens ein Teil von diesem kann ferner einen unlösbar mit dem Grundkörper verbundenen, keramischen Überzug bilden. Der keramische Überzug kann unlösbar auf einen Bereich des metallischen Grundkörpers aufgebracht, beispielsweise aufgesprüht werden. Dieser Überzug kann aus einer dünnen Schicht bestehen, deren Dicke beispielsweise nur höchstens 100 µm und zum Beispiel ungefähr 50 µm beträgt.

Der metallische Grundkörper und der allenfalls im Loch des Grundkörpers befestigte, metallische Bolzen kann beispielsweise aus Titan oder einer Titanlegierung bestehen. Der bzw. jeder keramische Körper und/oder der keramische Überzug besteht vorzugsweise aus Oxidkeramik, beispielsweise aus Aluminiumoxid und/oder Magnesiumoxid und/oder Zirkoniumdioxid, und ist vorzugsweise elektrisch isolierend.

Der Erfindungsgegenstand und weitere Vorteile von diesem werden anschliessend anhand in den Zeichnungen dargestellter Ausführungsbeispiele erläutert. Dabei zeigen die
Fig. 1 ein teils in Seitenansicht und teils im Schnitt gezeichnetes Implantat mit einem metallischen Grundkörper und einem an diesem befestigten keramischen Körper,
Fig. 2 den separat, aufgeschnitten und in Schrägansicht dargestellten, keramischen Körper,
Fig. 3 einen Schnitt durch eine Vorrichtung mit dem in einem Knochen eingesetzten Implantat gemäss Fig. 1 und einen an diesem befestigten Aufbauelement,
Fig. 4 eine Schrägansicht von Teilen der Vorrichtung gemäss Fig. 3,
Fig. 5 einen Schnitt durch das Implantat gemäss Fig. 1 und ein anderes, an diesem befestigtes Aufbauelement,
Fig. 6 eine Schrägansicht einer Variante eines aufgebrochenen, keramischen Körpers,
Fig. 7 eine Schrägansicht einer anderen, teilweise aufgeschnittenen Vorrichtung,
Fig. 8 einen Axialschnitt durch eine weitere Vorrichtung, wobei zwei verschiedene Implantat-Varianten je zur Hälfte dargestellt sind,
Figuren 9, 10 Schrägansichten von Teilen der Vorrichtung gemäss Fig. 8,
Fig. 11 einen Axialschnitt durch eine Vorrichtung mit gleichen Implantat-Varianten wie Fig. 8,
Fig. 12 eine Schrägansicht von Teilen der in Fig. 11 gezeichneten Vorrichtung,
Fig. 13 einen Axialschnitt durch eine Vorrichtung,
Fig. 14 den aufgebrochenen, in Schrägansicht dargestellten keramischen Körper der Vorrichtung gemäss Fig. 13,
Fig. 15 einen Axialschnitt durch eine Vorrichtung,
Fig. 16 eine Schrägansicht des aufgebrochenen, keramischen Körpers der Vorrichtung gemäss Fig. 15
Figuren 17 und 18 Axialschnitte durch verschiedene Vorrichtungen,
Fig. 19 eine Schrägansicht eines Implantats mit mindestens einen Vorsprung aufweisenden, keramischen Körper,
Fig. 20 einen Axialschnitt durch Teile einer Vorrichtung mit einem Implantat gemäss Fig. 19,
Fig. 21 eine Ansicht von einem Abschnitt eines zum Implantat gemäss Fig. 19 passenden, unverdrehbar positionierbaren Körpers,
Fig. 22 einen Axialschnitt durch eine Vorrichtung mit einem anderen Implantat, dessen keramischer Körper mindestens einen Vorsprung aufweist,
Fig. 23 einen Axialschnitt durch ein anderes Implantat mit Vorsprüngen und
Fig. 24 einen Axialschnitt durch ein Implantat mit einem Ausnehmungen aufweisenden, keramischen Körper.

Zu den nachfolgend beschriebenen Ausführungsbeispielen wird darauf hingewiesen, dass einander entsprechende, identische oder ähnliche Teile der verschiedenen Ausführungsbeispiele jeweils mit der gleichen Bezugsnummer bezeichnet werden.

Das in Fig. 1 ersichtliche Implantat 1 ist im allgemeinen rotationssymmetrisch zu einer Achse 3 und weist unten eine zum Verankern in einem Knochen eines Unter- oder Oberkiefers bestimmte Verankerungspartie 5 und oben einen zum Herausragen aus dem Knochen bestimmten Kopf 7 auf. Die einander abgewandten, freien Enden der Verankerungspartie und des Kopfs bilden das erste Ende 8 bzw. das zweite Ende 9 des Implantats 1. Die Verankerungspartie 5 hat von unten nach oben einen im allgemeinen zylindrischen Abschnitt 11 und einen sich von diesem weg erweiternden, trompetenförmigen Abschnitt 13, dessen Aussenfläche stetig und glatt an die Aussenfläche des im allgemeinen zylindrischen Abschnitts 11 anschliesst. Der im allgemeinen zylindrische Abschnitt 11 ist mit einem Aussengewinde 15 mit einer schraubenlinienförmigen Rippe 16 versehen. Das Aussengewinde 15 ist beispielsweise selbstschneidend ausgebildet. Die Verankerungspartie ist in der Nähe ihres unteren Endes mit mehreren, beispielsweise drei um die Achse 3 herum verteilten, länglichen Nuten und/oder Löchern 17 versehen, welche die schraubenlinienförmige Rippe 16 des Aussengewindes kreuzen.

Am oberen, weiteren Ende des trompetenförmigen Abschnitts 13 ist eine Schulter 21 mit einer vom ersten Ende 8 weg nach oben gegen innen geneigten, konischen Schulterfläche 22 vorhanden. Diese bildet mit der Achse 3 einen Winkel von 40° bis 50° und beispielsweise 45°. An das obere, engere Ende der konischen Schulterfläche 22 schliesst eine ebene, zur Achse 3 rechtwinklige Ringfläche 23 an.

Der Kopf 7 ragt von der Ringfläche 23 weg nach oben, ist im allgemeinen zur Achse 3 rotationssymmetrisch und hat einen im Wesentlichen zur Achse 3 parallelen, im allgemeinen zylindrischen Kopfabschnitt 25 sowie einen sich von diesem weg nach oben zum freien Ende des Kopfs und damit zum zweiten Ende 9 des ganzen Implantats hin verjüngenden, im allgemeinen konischen Kopfabschnitt 27. Die beiden Kopfabschnitte 25, 27 haben je eine zur Achse rotationssymmetrische, nämlich zylindrische bzw. konische Hüllfläche. Der maximale Durchmesser des Kopfs ist kleiner als die Durchmesser des Aussenrandes sowie auch des Innenrandes der konischen Schulterfläche 22. Die konische Hüllfläche des im allgemeinen konischen Kopfabschnitts 27 bildet mit der Achse 3 einen Winkel, der kleiner ist als der von der konischen Schulterfläche 22 mit der Achse gebildete Winkel und vorzugsweise 15° bis 25°, nämlich und zum Beispiel ungefähr 20° beträgt. Der zur Achse parallele Kopfabschnitt 25 ist durch eine im Axialschnitt konkav gebogene Ringnut 29 vom oberen Ende der Schulter 21 abgegrenzt. Der Kopf hat eine Umfangsfläche 30 und an seinem freien Ende eine das zweite Ende 9 des Implantats bildende ebene, ringförmige Stirnfläche 31. Die Umfangsfläche 30 des Kopfs 7 weist um die Achse herum abwechselnd aufeinanderfolgende Vorsprünge und Zwischenräume auf. Die Zwischenräume bestehen aus axialen Nuten 33, die im Querschnitt beispielsweise bogenförmig sind, jedoch statt dessen V-förmig, trapezförmig oder rechteckförmig sein könnten. Dabei sind vorzugsweise mehrere identisch ausgebildete sowie bemessene, erste Nuten sowie eine breitere und/oder tiefere, zweite Nut vorhanden. Die im Querschnitt tiefsten Bereiche der Nuten 33 erstrecken sich über die ganze Länge des zur Achse 3 parallelen Kopfabschnitts 25 und mindestens annähernd sowie beispielsweise genau bis zum dünneren Ende des konischen Kopfabschnitts 27 und also auch bis zum zweiten Ende 9 des ganzen Implantats.

Das Implantat 1 ist mit einem zur Achse 3 koaxialen Sackloch 35 versehen. Dieses besitzt eine sich beim zweiten Ende 9 befindende, von der ringförmigen Stirnfläche 31 umschlossene Mündung 36 und von dieser weg nach unten der Reihe nach kurzen, glatten, ersten zylindrischen Lochabschnitt 37, ein beispielsweise metrisches Innengewinde 38, einen Übergangsabschnitt 39, einen zweiten zylindrischen, glatten, d.h. gewindelosen Lochabschnitt 40 und einen Grund 41. Das untere, weiter von der Mündung entfernte Ende des Innengewindes 38 befindet sich innerhalb des sich erweiternden, trompetenförmigen Abschnitts 13 des Implantats. Der Durchmesser des zweiten, zylindrischen Lochabschnitts 40 ist kleiner als derjenige des ersten zylindrischen Lochabschnitt 37 und ungefähr gleich dem Kerndurchmesser des Innengewindes. Der Übergangsabschnitt 39 besteht aus einer ziemlich flachen Ringnut und hat eine Fläche, die im Axialschnitt stetig gebogen ist und stetig in die zylindrische Fläche des zweiten, zylindrischen Lochabschnitts übergeht. Der Grund 41 verjüngt sich zu seiner tiefsten Stelle hin und ist durch eine im Axialschnitt gebogene Fläche begrenzt, die stetig und glatt mit der Fläche des zweiten zylindrischen Lochabschnitts 40 zusammenhängt.

Das Implantat 1 besteht aus zwei ursprünglich separaten, einstückigen Körpern, nämlich einem länglichen, metallischen Grundkörper 50 und einem ringförmigen und/oder hülsenförmigen, noch separat in Fig. 2 gezeichneten, keramischen Körper 60. Der metallische Grundkörper 50 bildet den grössten Teil des Implantats 1 und erstreckt sich vom ersten Ende 8 bis zum zweiten Ende 9 des Implantats. Der metallische Grundkörper 50 bildet insbesondere auch mindestens den grössten Teil der Verankerungspartie 5, das ganzen Aussengewinde 15 sowie den ganzen Kopf 7 und die ganze Begrenzung des Sacklochs 35. Der keramische Körper 60 bildet den sich in der Umgebung der Schulter 21 befindenden Bereich der Aussen- und/oder Umfangsfläche des Implantats, nämlich den oberen Bereich der Umfangsfläche des trompetenförmigen Abschnitts 13, die konische Schulterfläche 22 und den äusseren Randbereich der ebenen Ringfläche 23. Der metallische Grundkörper 50 hat in der Höhe der Schulter 21 eine die Achse 3 und das Sackloch 35 umschliessende, ringförmige Kehle 51. Diese ist durch eine am unteren Ende der Kehle angeordnete Anschlagfläche 52 und eine Halsfläche 53 gebildet bzw. begrenzt. Die Anschlagfläche 52 befindet sich ungefähr in der Höhe des Übergangsabschnitts 39 des Sacklochs 35. Die Halsfläche 53 ragt von der Anschlagfläche 52 weg nach oben, begrenzt einen Hals des Grundkörpers und erstreckt sich bis zur ebenen Ringfläche 23.

Der keramische Körper 60 hat am unteren Ende eine ringförmige Auflagefläche 62 und eine sich von dieser bis zum oberen Ende des keramische Körpers erstreckende Innenfläche 63. Die Anschlagfläche 52 des Grundkörpers 50 und die Auflagefläche 62 des keramischen Körpers 60 bilden mit der Achse 3 einen mindestens ungefähr rechten Winkel und nämlich einen genau rechten Winkel. Die beiden Flächen 52, 62 sind dementsprechend eben. Die Halsfläche 53 des Grundkörpers 50 und die Innenfläche 63 des Körpers 60 sind mindestens ungefähr parallel zur Achse und nämlich genau parallel zu dieser sowie zylindrisch. Die Innenfläche 63 des keramischen Körpers 60 umschliesst die Halsfläche 53 des metallischen Grundkörpers 50 zum Beispiel mit kleinen radialem Spiel. Der radiale Abstand der Innenfläche 63 von der Halsfläche 53 beträgt vorzugsweise höchstens 200 µm und zum Beispiel 5 µm bis 50 µm. Der keramische Körper 60 ist durch ein Bindemittel unlösbar mit dem Grundkörper 50 verbunden. Das Bindemittel besteht aus einem dünnflüssigen, in dünner Schicht auftragbaren Klebestoff, ist zwischen den beiden zylindrischen Flächen 53, 63 angeordnet und verbindet diese miteinander. Die beiden ebenen Flächen 52 und 62 liegen beispielsweise ohne dazwischen angeordnetes Bindemittel spaltfrei aufeinander auf, können aber eventuell ebenfalls durch ein Bindemittel miteinander verbunden sein. Der metallische Grundkörper 50 und der keramische Körper 60 bilden nach dem Aushärten des Bindemittels zusammen eine starre, untrennbare Einheit. Die von metallischen Grundkörper 50 und vom keramischen Körper 60 gebildeten Umfangsflächenbereiche des trompetenförmigen Abschnitts 13 können bei der Herstellung der beiden Körper 50, 60 derart ausgebildet werden, dass sie nach dem Verkleben der beiden Körper ohne Nachbearbeitung der letzteren praktisch glatt, stufenlos und fugenlos aneinander anschliessen.

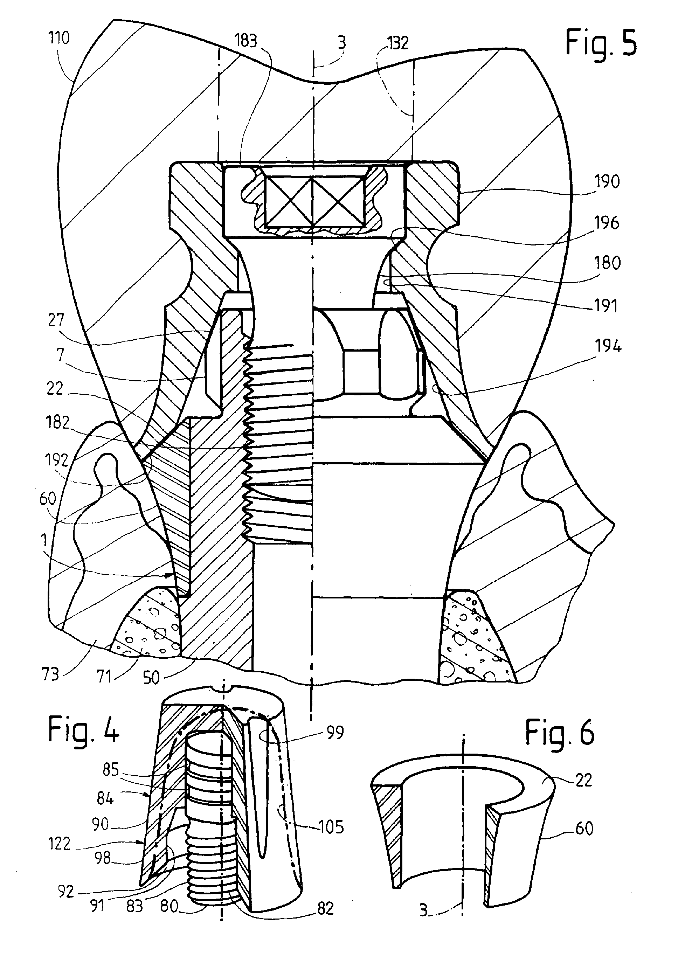

Die Fig. 3 zeigt einen Knochen 71, beispielsweise den Unterkiefer, das diesen bedeckende Weichgewebe 73 - d.h. die Gingiva - eines Patienten und eine Vorrichtung 75. Die Vorrichtung 75 weist ein gemäss Fig. 1 ausgebildetes, in den Knochen 71 eingesetztes Implantat, 1 einen metallischen Bolzen 80 und ein Aufbauelement 77 bzw. eine Suprakonstruktion mit einem einstückigen, keramischen Körper 90 sowie einer Krone 110 auf. Der Bolzen 80 und der Körper 90 sind auch in Fig. 4 ersichtlich.

Der metallische Bolzen 80 hat einen Gewindeabschnitt 82 mit einem Aussengewinde 83 und einen zylindrischen, gewindelosen Abschnitt 84, dessen Aussendurchmesser gleich dem Aussendurchmesser des Gewindeabschnitts 82 oder ein wenig grösser als der letztgenannte Durchmesser ist. Der zylindrische Abschnitt 84 ist mit mindestens einer Ringnut 85 und beispielsweise mit zwei oder noch mehr solchen versehen. Zwischen dem Gewindeabschnitt 82 und dem zylindrischen Abschnitt 84 ist eine im Axialschnitt konkav gebogene Ringnut vorhanden.

Der keramische Körper 90 ist kappenförmig und/oder hülsenförmig und hat ein am unteren Ende des Körpers 90 offenes, am oberen Ende durch einen aus keramischen Material bestehenden Deckabschnitt des Körpers 90 geschlossenes, axiales Loch 91. Dessen Mündungsabschnitt ist durch eine sich von unteren Ende des Körpers 90 weg nach oben verjüngende, konische Auflagefläche 92 gebildet. Diese bildet bei zusammengesetzter Vorrichtung 75 mit der Achse 3 dem gleichen Winkel wie die Schulterfläche 22 und liegt mindestens auf dem inneren Bereich von dieser spaltfrei auf. Auf die konische Auflagefläche 92 folgen nach oben eine zylindrische Innenfläche 93 und eine konische Innenfläche 94. Diese Innenflächen 93, 94 umschliessen den im allgemeinen zylindrischen Kopfabschnitt 25 bzw. konischen Kopfabschnitt 27, wobei insbesondere zwischen dem konischen Kopfabschnitt und der konischen Innenfläche 94 höchstens ein sehr kleines Spiel vorhanden ist. An die konischen Innenfläche 94 schliesst eine ringförmige, zur Achse 3 radiale sowie rechtwinklige Innenfläche 95 an, die der Stirnfläche 31 des Implantats 1 in kleineren Abstand gegenübersteht. An das innere Ende der radialen Innenfläche 95 schliesst eine zylindrische Innenfläche 96 an, die dem zylindrischen Abschnitt 84 des Bolzens 80 mit höchstens kleinen Spiel umschliesst. Das obere Ende des Lochs 91 ist durch eine zum grössten Teil ebene Endfläche 97 gebildet, die der Endfläche des Bolzen im Abstand gegenübersteht. Der kappenförmige, keramische Körper 90 hat eine im allgemeinen zur Achse 3 rotationssymmetrische, nämlich eine sich nach oben verjüngende, konische Umfangsfläche 98, ist jedoch mit einigen entlang dem Umfang verteilten Ausnehmungen 99 versehen, in die ein Drehwerkzeug eingreifen kann. Der Körper 90 hat am oberen Ende eine Stirnfläche, die im Wesentlichen, d.h. abgesehen von den Ausnehmungen 99, rotationssymmetrisch, und ferner glatt, eben sowie lochfrei ist.

Der Aussenrand der konischen Auflagefläche 92 des keramischen Körpers 90 hat beispielsweise einen kleineren Durchmesser als der Aussenrand der Schulterfläche 22, so dass die letztere noch einen den unteren Rand des keramischen Körpers 90 umschliessenden Bereich hat. Die Krone 110 besteht zum Beispiel aus einer Goldlegierung und/oder aus Porzellan und sitzt bei der fertigen Vorrichtung fest auf dem kappenförmigen, keramischen Körper 90. Die Krone liegt auf dem äusseren Bereich der Schulterfläche 22 auf und schliesst stufenlos sowie glatt an das obere Ende der Umfangsfläche des trompetenförmigen Abschnitt 13 des Implantats an. Der kappenförmige, keramische Körper 90 ist im obersten zylindrischen Abschnitt des Lochs 91 durch ein Bindemittel 120, beispielsweise einen relativ viskosen, in dicker Schicht auftragbaren Zement, unlösbar mit dem zylindrischen Abschnitt 84 des Bolzens 80 verbunden. Der Zement füllt dann die Ringnuten 85, und den Zwischenraum zwischen dem oberen Ende des Bolzens 80 sowie der Endfläche 97 des Lochs 91 aus. Abhängig von radialen Spiel kann eventuell auch noch zwischen den ringförmigen, zylindrischen Umfangsflächenabschnitten des zylindrischen Abschnitts 84 des Bolzens und der zylindrischen Innenfläche 96 des Körpers 90 Zement vorhanden sein. Es sei noch angemerkt, dass das Bindemittel in Fig. 4 nicht dargestellt wurde. Der Bolzen 80 und der kappenförmige, keramische Körper 90 bilden nach dem Aushärten des Bindemittels 120 bzw. Zements zusammen eine starre, untrennbare Einheit 122.

Der metallische Grundkörper 50, der metallischen Bolzen 80 und die beiden keramischen Körper 60 und 90 werden in einen Herstellerwerk hergestellt. Die beiden keramischen Körper 60 und 90 werden im Herstellerwerk mittels der schon genannten Bindemittel, unlösbar sowie starr mit dem Grundkörper 50 bzw. Bolzen 80 verbunden. Das aus dem Grundkörper 50 sowie dem keramischen Körper 60 bestehende Implantat 1 und die aus dem Bolzen 80 und keramische Körper 90 bestehende Einheit 122 werden dann als zwei Einheiten beispielsweise an eine Zahnarztpraxis oder Zahnklinik geliefert.

Ein Zahnarzt kann das Implantat 1 gemäss der Fig. 3 transgigival in den Mund eines Patienten einsetzen, so dass die Verankerungspartie 5 des Implantats 1 zu einem grossen Teil in einem Loch des Knochens 71 verankert wird und der obere Endabschnitt des Implantats 1 aus dem Knochen herausragt. Der am Grundkörper 50 befestigte, keramische Körper 60 erstreckt sich ungefähr vom Kamm des Knochens 71 bis annähernd zum Kamm des Weichgewebes. Der Zahnarzt kann dann zunächst mit einer Schraube ein kappenförmiges Einheilelement an Implantat 1 befestigen, bis die Operationswunde verheilt ist. Nach der Einheilphase kann der Zahnarzt das Einheilelement entfernen und die aus dem Bolzen 80 und dem keramischen Körper 90 bestehende Einheit 122 am Implantat 1 befestigen. Der Zahnarzt kann hierzu mit einem Drehwerkzeug in die Ausnehmungen 99 des keramischen Körper 90 eingreifen und den Gewindeabschnitt 82 des Bolzens 80 in das Innengewinde 38 des Implantats 1 einschrauben, bis die Auflegefläche 92 des keramischen Körpers 90 spaltfrei auf der Schulterfläche 22 des Implantats aufliegt. Der untere Endabschnitt des zylindrischen Abschnitts 84 des Bolzens 80 ragt bei der fertigen Vorrichtung mit höchstens kleinem, radialen Spiel ein wenig in den zylindrischen Lochabschnitt 37 des Implantats 1 hinein. Die aus dem Bolzen 80 und dem keramischen Körper 90 bestehende Einheit 122 wird dann durch den Bolzen lösbar aber stabil mit dem Implantat 1 verbunden.

Eventuell kann der Zahnarzt vor dem Einschrauben des Bolzens 80 in das Implantat 1 noch ein Bindemittel 125 anbringen, das dem keramische Körper 90 zusätzlich mit der Umfangsfläche 30 und der Stirnfläche 31 des Kopfs 7 verbindet und die Nuten 33 des Kopfs 7 sowie den Zwischenraum zwischen der Stirnfläche 31 des Kopfs und der radialen Innenfläche 95 des Körpers 90 mindestens teilweise ausfüllt. Dieses Bindemittel 125 besteht zum Beispiel aus einem Provisoriumszement, wie es von Zahnärzten zur vorübergehende Befestigung von provisorischen eingesetzten Aufbauteilen verwendet wird und der eine ziemlich feste Verbindung ergibt, aber ermöglicht, die miteinander verbundenen Teile mit einer gewissen Kraft wieder voneinander zu trennen. Das Bindemittel 125 kann jedoch auch aus einem normalen, für eine dauerhafte, unlösbare Verbindung vorgesehenen Zement bestehen. Das allenfalls vorhandene Bindemittel 125 gibt zusätzlich zum an sich lösbar in das Implantat eingeschraubten Bolzen 80 noch eine nur mit einer gewissen Kraft oder überhaupt nicht zerstörungsfrei lösbare Verbindung des keramischen Körpers 90 mit dem Implantat 1. Das Implantat 1 und die aus dem Bolzen 80 sowie dem keramischen Körper 90 bestehende Einheit 122 bilden nach ihrer lösbaren oder unlösbaren Verbindung zusammen einen stabile, starren Support. Der Zahnarzt muss also für die Bildung dieses Supports lediglich zwei separate, dem Zahnarzt zur Verfügung gestellte Einheiten, nämlich das Implantat 1 und die Einheit 122, im Mund des Patienten zusammensetzen. Dies vereinfacht das Aufbauen eines Zahnersatzes im Mund eines Patienten.

Wenn der kappenförmige, keramische Körper 90 am Implantat 1 befestigt ist, kann der Zahnarzt für die Bildung eines Zahnersatzes einen Abdruck des oberen Implantatteils und des Körpers 90 nehmen, die Krone 110 herstellen lassen und die Krone mit nicht gezeichnetem Zement am keramische Körper 90 und eventuell an der Schulterfläche 11 befestigen. Nötigenfalls kann der Zahnarzt den keramischen Körper 60 und/oder den keramischen Körper 90 zur Optimierung des Form des Zahnersatzes noch innerhalb des Munds des Patienten stellenweise beschleifen. Dabei können zum Beispiel die in den Figuren 2, 3 und 4 durch strichpunktierte Linsen angedeuteten Bereiche 65 und 105 der beiden ursprünglich rotationssymmetrische Körper 60 bzw. 90 weggeschliffen werden. Da der der Schulterfläche 22 abgewandte Endabschnitt des keramischen Körpers 90 das obere, aus dem Implantat 1 herausragende Ende des Bolzens 80 bedeckt, kann nötigenfalls auch ein Teil des das obere Bolzenende bedeckenden, keramischen Materials weggeschliffen werden.

Der Bolzen 80 wird sowohl im Innengewinde 38 als auch im zylindrischen Lochabschnitt 37 des Implantats 1 seitlich abstützt. Der kappenförmige, keramische Körper 90 wird vom zylindrischen Abschnitt 84 des Bolzens gehalten und seitlich abgestützt. Ferner liegt der Körper 90 spielfrei und spaltfrei auf der Schulterfläche 22 des Implantats auf und wird zudem seitlich vom Kopf 7 abgestützt, und zwar insbesonders durch den konischen Kopfabschnitt 27 bis zum oberen, zweiten Ende 9 des Implantats 1. Das Aufbauelement 77 kann daher nebst ungefähr axialen Kräften auch grosse, ungefähr quer zur Achse 3 gerichtete Kräfte auf das Implantat übertragen, ohne infolge dieser Kräfte Bewegungen bezüglich des Implantats auszuführen. Dies gewährleistet eine grosse Stabilität des gebildeten Zahnersatzes.

Das an den Zahnersatz angrenzende Weichgewebe 73 liegt nach dem Einheilen bei der fertigen Vorrichtung mindestens zum grössten Teil an der Umfangsfläche des ringförmigen Keramikkörpers 60 an und ist praktisch an diesem angewachsen. Eventuell liegt auch noch Weichgewebe an der beispielsweise aus Porzellan bestehende Krone 110 an. Dagegen liegt das Weichgewebe nirgends oder mindestens fast nirgends an einer metallischen Fläche des Implantats an. Dies wirkt Entzündungen des Weichgewebes entgegen. Wenn die Krone 110 aus Porzellan besteht, ermöglicht der keramischen Körper 90, die Bildung einer glänzenden, farblich einem schönen, natürlichen Zahn entsprechende Krone. Falls die Krone 110 aus einem metallischen Material besteht, wird sie durch die beiden keramischen Körper 60 und 90 gegen den metallischen Grundkörper 50 des Implantats elektrisch isoliert, so dass kein galvanisch erzeugter, elektrischer Strom von der Krone 110 zum Implantat 1 fliessen kann.

Der in Fig. 3 mit vollen Linien gezeichnete, auch in Fig. 4 ersichtliche, keramische Körper 90 kann durch den strickpunktiert angedeuteten keramischen Körper 90' ersetzt werden. Dieser ist im Wesentlichen ungefähr zylindrisch und hat an seinem unteren Ende eine ringförmige Auflagefläche, deren Aussendurchmesser ungefähr oder gleich dem Aussendurchmesser der Schulterfläche 22 ist.

Das Implantat 1 der in Fig. 5 dargestellten Vorrichtung ist gleich ausgebildet wie das in den Figuren 1 und 3 ersichtliche Implantat. Die in Fig. 5 ersichtlichen Vorrichtung besitzt jedoch anstelle des Bolzens 80 eine Okklusalschraube 180 und anstelle des keramischen Körper 90 einen metallischen Körper 190. Die Schraube 180 hat einen Gewindeabschnitt 182 und einen Kopf 183 mit einem Mehrkantloch, beispielsweise einem Sechskantloch. Der metallische Körper 190 ist kappenförmig und/oder hülsenförmig und hat jedoch anstelle eines axialen Sacklochs ein durchgehendes axiales Loch 191. Dieses ist abgestuft und hat zuunterst eine konische Auflagefläche 192 die bis zum Aussenrand der konischen Schulterfläche 22 des Implantats auf der Schulterfläche aufliegt. Der Körper 190 hat ferner eine konische Innenfläche 194, welche den konischen Kopfabschnitt 27 des Implantats 1 mit höchstens kleinem Spiel umschliesst. Das Loch 191 besitzt ferner eine sich nach oben konisch erweiternde Auflagefläche 196, auf welchem der Kopf der Okklusalschraube mit einer konischen Fläche aufliegt. Das Aufbauelement der in Fig. 5 ersichtliche Vorrichtung besitzt wiederum eine Krone 110. Diese ist an den Körper 190 angegossen und besteht zum Beispiel wie beim Aufbauelement gemäss Fig. 3 im allgemeinen aus Porzellan oder einer Goldlegierung. Der metallische Körper 190 hat einen vom Aussenrand der Auflagefläche 192 weg nach oben verlaufenden Aussenflächenabschnitt, der glatt und stetig an die Aussenfläche des keramischen Körpers 60 anschliesst und an den dann die Aussenfläche der Krone glatt und stetig anschliesst.

Die Krone 110 hat oberhalb des Kopfs 183 der Okklusalschraube 180 einen strichpunktiert angedeuteten, zylindrischen Bereich 132. Dieser besteht zum Beispiel aus einem nach dem Einsetzen der Schraube 180 mit einem Einsatz und/oder Zement oder dergleichen verschlossenen Loch und kann nötigenfalls später ohne Beschädigung der restlichen Krone wieder freigelegt - beispielsweise aufgebohrt - werden. Dies ermöglicht, die Okklusalschraube nachträglich wieder zu lösen und die Krone 110 sowie den Körper 190 vom Implantat 1 zu trennen. Die an das Weichgewebe angrenzende Fläche der Vorrichtung ist wiederum mindestens zu einem grossen Teil durch den keramischen Körper 60 gebildet.

Der keramische Körper 60 des in den Figuren 1, 3 und 5 ersichtlichen Implantats 1 kann durch den in Fig. 6 ersichtlichen, keramischen Körper 60 ersetzt werden. Dieser unterscheidet sich vom vorher beschriebenen Körper 60 dadurch, dass er am oberen Ende eine ebene, zur Achse 3 rechtwinklige Ringfläche hat. Diese befindet sich beim fertigen Implantat unterhalb des in Fig. 1 vom Grundkörper 50 gebildeten Hauptteils der Ringfläche 23 oder in der gleichen Höhe wie die letztere und bildet für sich allein oder zusammen mit der von Grundkörper 50 gebildeten Ringfläche eine zur Achse 3 rechtwinklige Schulterfläche 22.

Der hülsen- und/oder ringförmige Körper 60 könnte zudem anstelle der gegen oben nach aussen geneigte Umfangsfläche eine mindestens zum Teil zylindrischen oder sogar gegen oben nach innen geneigte Fläche haben.

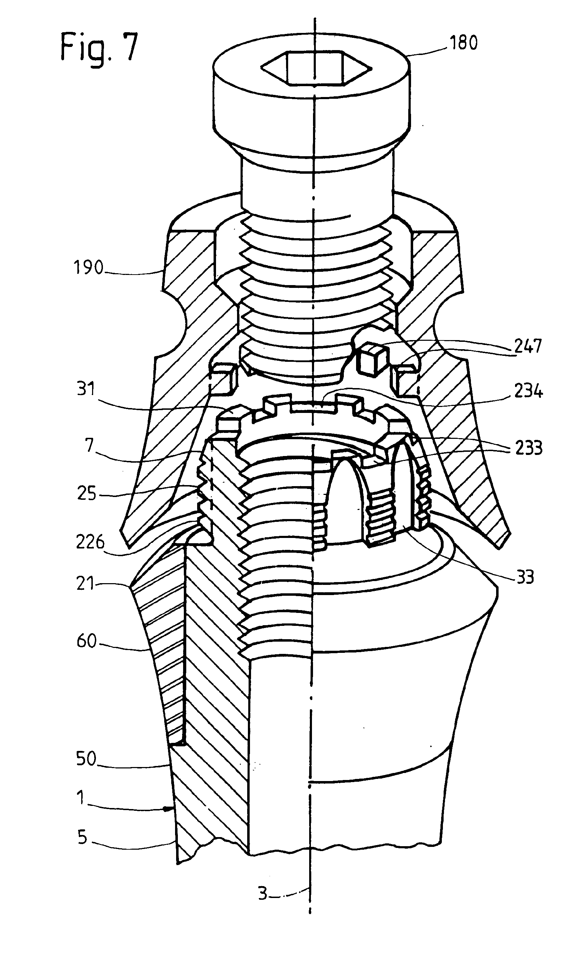

Die zum Teil in Fig. 7 dargestellte Vorrichtung besitzt ein Implantat 1, dessen Verankerungpartie 5 und Schulter 21 gleich wie beim Implantat gemäss Fig. 1 ausgebildet sind. Hingegen ist der Kopf 7 anders ausgebildet als bei dem in Fig. 1 dargestellten Implantat. Der im allgemeinen zur Achse 3 parallele und im allgemeinen zylindrische Kopfabschnitt 25 ist nämlich noch mit einem Aussengewinde 226 versehen. Ferner sind die axialen Nuten 33 im Querschnitt statt bogenförmig beispielsweise ungefähr rechteck- oder trapezförmig. Des weiteren ist die ringförmige Stirnfläche 31 mit entlang dem Umfang verteilen, radialen Ausnehmungen bzw. Nuten 233, 234 versehenen, wobei mehrere identische, erste Ausnehmungen bzw. Nuten 233 und eine zweite, breitere und/oder tiefere Ausnehmung bzw. Nut 234 vorhanden sind. In Fig. 7 sind noch eine Okklusalschraube 180 und ein metallischer, kappen- und/oder hülsenförmiger Körper 190 ersichtlich. Der letzere ist ähnlich wie der in Fig. 5 dargestellte Körper 190 ausgebildet, hat aber noch radial nach innen ragende Vorsprünge 247. Diese können mit höchstens kleinem Spiel in eine der ersten Ausnehmungen bzw. Nuten 233 eingreifen und der Körper 190 dadurch bezüglich des Implantats 1 drehfest in einer aus mehreren Drehstellungen auswählbaren Drehstellung positionieren.

An dem in Fig. 7 dargestellten Implantat kann jedoch anstelle der Okklusalschraube 180 und des metallischen Körpers 190 ein metallischer Bolzen mit einem starr an diesem befestigten, oben geschlossenen, keramischen Körper befestigt werden. Dieser Bolzen und keramische Körper können ähnlich wie die entsprechenden Teile in den Figuren 3 und 4 ausgebildet sein. Der keramische Körper hat insbesondere keine den Vorsprüngen 247 entsprechenden Vorsprünge, so dass die aus dem Bolzen und dem keramischen Körper bestehende Einheit durch Drehen von dieser am Implantat angeschraubt werden kann. Die Ausnehmungen bzw. Nuten 233 haben dann keine positionierende Wirkung. Das in Fig. 7 ersichtliche Implantat ermöglicht also wahlweise verschiedene Befestigungsarten.

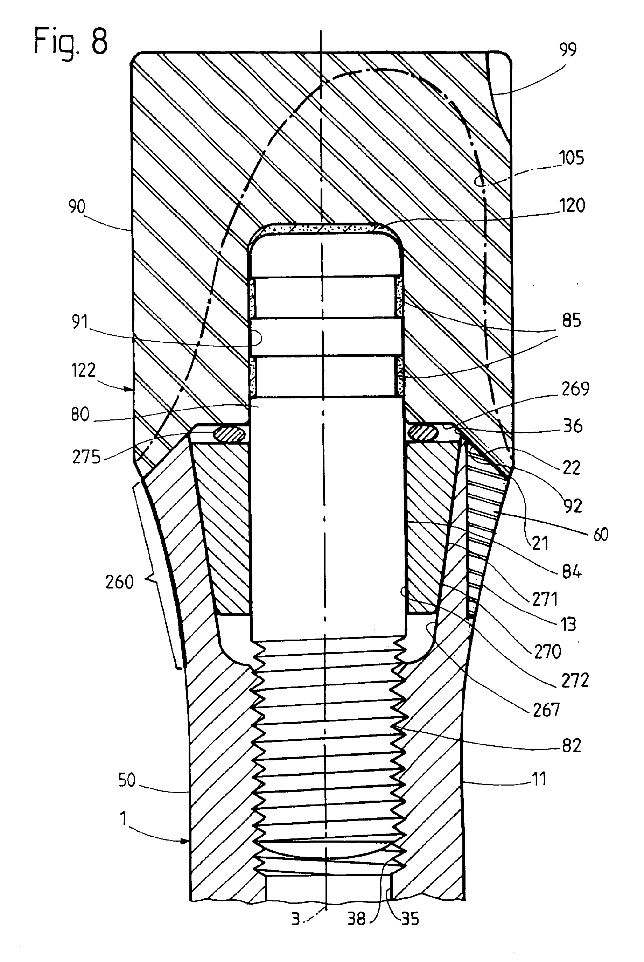

Die zum Teil in Fig. 8 ersichtliche Vorrichtung besitzt ein Implantat 1, das gemäss der linken oder rechten Figurenhälfte ausgebildet sein kann. Beide zur Hälfte in der Fig. 8 dargestellten Implantat-Varianten haben vom unteren Ende der Verankerungspartie 5 bis zur Schulter 21 ungefähr die gleiche äussere Form wie das in Fig. 1 gezeichnete Implantat. Jedes in Fig. 8 ersichtliche Implantat besitzt insbesondere einen im allgemeinen zylindrischen Abschnitt 11, einen trompetenförmigen Abschnitt 13 und eine Schulter 21 mit einer konischen Schulterfläche 22. Das Implantat weist einen metallischen Grundkörper 50 auf, der bei der in der linken Figurenhälfte gezeichneten Variante auch mindestens den grössten Teil des trompetenförmigen Abschnitts 13 und der konische Schulterfläche 22 bildet. Der sich vom Aussenrand der Schulterfläche 22 bis in die Nähe des unteren Endes des trompetenförmigen Abschnitts 13 erstreckende Abschnitt der Umfangsfläche des metallischen Grundkörpers 50 ist bei der links gezeichneten Variante mit einem aufgesprühten, keramischen Überzug 260 versehen, der beispielsweise ungefähr 50 µm dick ist. Die in der rechten Hälfte der Fig. 8 gezeichnete Variante des Implantats hat - ähnlich wie das Implantat gemäss den Figuren 1 und 3 - einen ringförmigen und/oder hülsenförmigen, keramischen Körper 60, der mindestens den äussersten Teil sowie den Aussenrand der konischen Schulterfläche 22 und beispielsweise den grössten Teil von dieser oder sogar die ganze konische Schulterfläche 22 bildet. Das in Fig. 8 ersichtliche Implantat hat keinen dem Kopf 7 des in Fig. 1 dargestellten Implantats entsprechenden Kopf. Das axiale Sackloch 35 hat eine vom Innenrand der konischen Schulterfläche 22 gebildete Mündung 36. Ferner hat das Sackloch 35 zwischen seinem Innengewinde 38 und seiner Mündung 36 eine sich zur letzeren hin erweiternden, konischen Lochabschnitt 267.

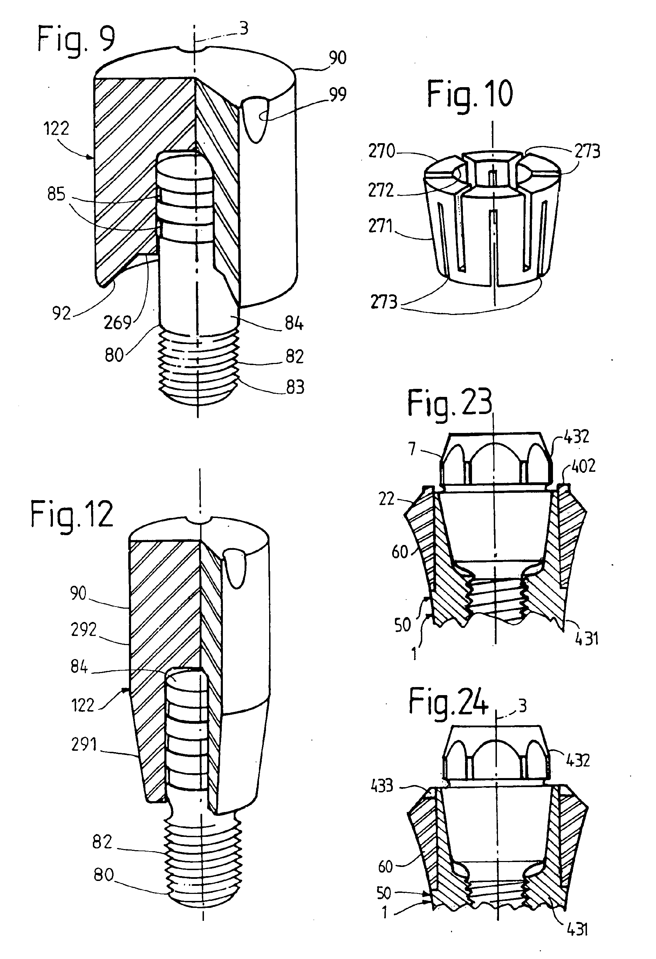

Die in Fig. 8 ersichtliche Vorrichtung besitzt ferner einen metallischen Bolzen 80 und einen hülsen- und/oder kappenförmigen, keramische Körper 90. Der Bolzen 80 und der Körper 90 sind auch in Fig. 9 ersichtlich. Der Bolzen 80 hat einen Gewindeabschnitt 82 und einen zylindrischen Abschnitt 84. Der letztere ist in der Nähe seines dem Gewindeabschnitt abgewandten Endes mit Ringnuten 85 versehen, während sein an den Gewindeabschnitt anschliessender Bereich nutenlos ist und eine glatte Zylinderfläche hat. Der in Fig. 8 dargestellte keramische Körper 90 hat wiederum ein axiales, unten offenes, oben geschlossenes, zum grössten Teil zylindrisches Loch 91 und eine konische Auflagefläche 92, die bei zusammengesetzter Vorrichtung auf der Schulterfläche 22 auftritt. An dem inneren Rand der konischen Auflagefläche 92 schliesst eine ebene, zur Achse 3 rechtwinklige Ringfläche 269 an. Der Aussenrand der Auflagefläche 92 hat ungefähr oder genau den gleichen Durchmesser wie der Aussenrand der Schulterfläche 22. Die Umfangsfläche des Körpers 90 hat zuunterst eine ringförmigen, schmalen sich nach oben erweiternden Abschnitt, der mindestens annähernd stetig an den von Überzug 260 gebildeten Umfangsflächenabschnitt des Implantats anschliesst. Der obere, grösste Teil der Umfangsfläche des Körpers 90 ist zylindrisch. Beim oberen Ende des Körpers 90 sind einige Ausnehmungen 99 zum Angreifen mit einem Drehwerkzeug vorhanden. Der obere Endabschnitt des Bolzens 80 ragt wie beim in Fig. 3 dargestellten Ausführungsbeispiel in das Loch 91 des keramischen Körpers 90 hinein und ist mit einem Bindemittel 120, nämlich Zement, unlösbar mit dem Körper 90 verbunden. Die Vorrichtung gemäss Fig. 8 besitzt noch einen auch separat in Fig. 10 gezeichneten, metallischen Ring 270. Dieser befindet sich bei zusammengesetzter Vorrichtung im konischen Lochabschnitt 267 des Implantats, umschliesst den zylindrischen Abschnitt 84 des Bolzens 80 und hat eine konische Aussenfläche 271 sowie eine zylindrische Innenfläche 272. Die konische Innenfläche des Lochabschnitts 267 sowie die konische Aussenfläche 271 bilden mit der Achse 3 den gleichen Winkel, der vorzugsweise 5° bis 10° und zum Beispiel ungefähr 8° beträgt. Der Ring ist durch in Fig. 10 ersichtliche, abwechselnd von unten und oben her eingeschnittene Einschnitte 273 in etwas federnde Segmente unterteilt. Zwischen der Ringfläche 269 des keramischen Körpers 90 und der ebenen, oberen Endfläche des Rings 270 ist ein deformierbarer Druckring 275 angeordnet. Dieser besteht zum Beispiel aus einem weichen, deformierbaren Metall, etwa Gold, oder aus einem elastischen oder sogar gummielastischen Kunststoff und hat den Zweck, den Ring 270 bei zusammengesetzter Vorrichtung möglichst tief in den Lochabschnitt 267 hinabzudrücken.

Der Bolzen 80 wird wiederum schon im Herstellerwerk durch das in Fig. 8, aber nicht in Fig. 9 gezeichnete Bindemittel 120 unlösbar mit dem keramischen Körper 90 verbunden, so dass der Bolzen 80 und der Körper 90 zusammen eine feste Einheit 122 bilden. Der Druckring 275 und der Ring 270 können ebenfalls schon im Herstellerwerk auf den Bolzen 80 aufgeschoben werden, wobei dann der Ring 270 leicht am Bolzen angeklemmt, aber noch entlang diesem verschiebbar ist. Das Implantat 1 und die Einheit 122 mit dem auf dem Bolzen 80 aufgesteckten Ringen 271 und 275 werden beispielsweise an einen Zahnarzt geliefert. Dieser kann dann das Implantat 1 transgingival in den Mund eines Patienten einsetzen. Nach dem Einheilen das Implantats 1 kann der Zahnarzt die Einheit 122 mit den beiden Ringen 271, 275 mit dem Implantat 1 verbinden, d.h. den Bolzen 80 in das Implantat einschrauben. Wenn die Auflagefläche 92 des Körpers auf der Schulterfläche 22 aufliegt, drückt der deformierbare Druckring 275 den Ring 270 nach unten, so dass dieser mit seiner Aussenfläche 271 fest und praktisch spielfrei an der Innenfläche der konischen Erweiterung 267 und mit seiner Innenfläche 272 an der zylindrischen Fläche des Bolzens 80 anliegt. Der Ring 271 zentriert daher den Bolzen und stützt diesen zwischen dem Innengewinde 38 sowie der Mündung 36 des Sacklochs 35 bis fast zur Mündung 36 seitlich im Implantat ab. Das Implantat 1 und die Einheit 122 bilden dann zusammen einen stabilen Support. Der Zahnarzt kann nach dem Einsetzen der Einheit 122 in den Mund des Patienten nötigenfalls mindestens einen Bereich 105 des keramischen Körpers 90 wegschleifen und eine Krone oder sonstige Suprakonstruktion auf diesem aufbauen. Die an das Weichgewebe angrenzende Fläche des Zahnersatzes wird dann mindestens zu einem grossen Teil durch die Umfangsfläche des keramischen Übergangs 260 und eventuell auch noch durch einen Abschnitt der Umfangsfläche des keramischen Körpers 90 gebildet.

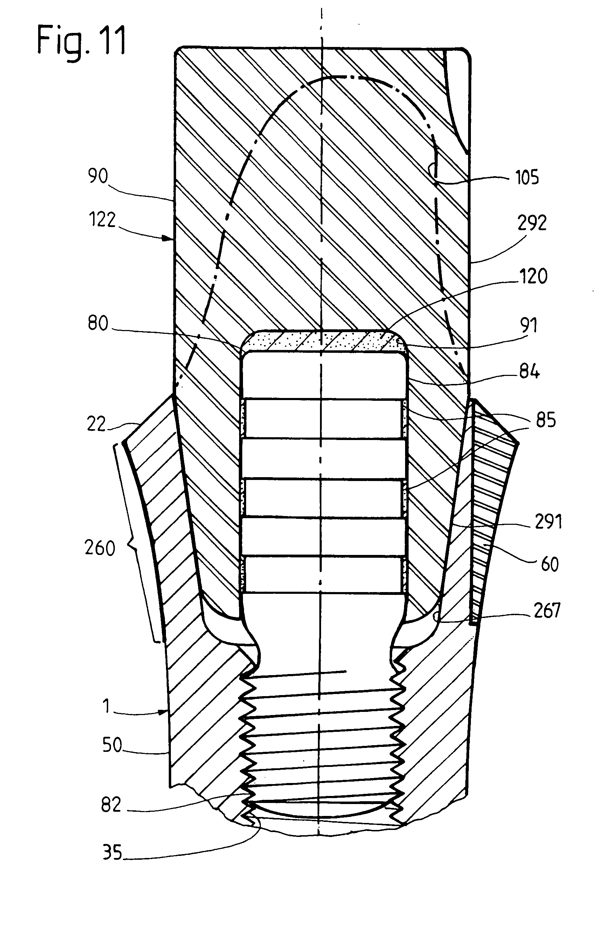

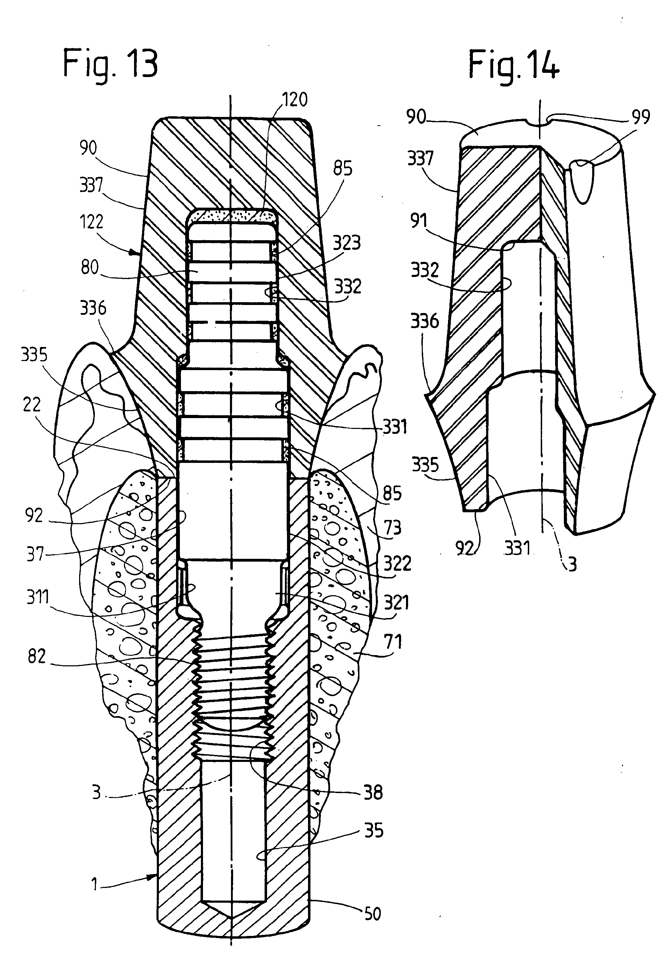

Die zum Teil in Fig. 11 ersichtliche Vorrichtung besitzt ein gemäss der linken oder rechten Figurenhälfte ausgebildetes Implantat 1. Die beiden je zur Hälfte gezeichneten Implantat-Varianten sind gleich wie die in Fig. 8 gezeichneten Implantat-Varianten ausgebildet und haben einen metallischen Grundkörper 50 sowie einen keramischen Überzug 260 bzw. Körper 60. Die Vorrichtung gemäss Fig. 11 besitzt ferner eine separat in Fig. 12 dargestellte Einheit 122 mit einem metallischen Bolzen 80 und einem keramischen Körper 90. Der Bolzen hat einen Gewindeabschnitt 82 sowie einen zylindrischen Abschnitt 84 und ist dem in Fig. 3 gezeichneten Bolzen ähnlich, ragt jedoch bei zusammengesetzter Vorrichtung höchstens wenig aus dem Implantat heraus und hat im zylindrischen Abschnitt 84 beispielsweise drei statt zwei Ringnuten 85. Der in den Figuren 11 und 12 ersichtliche, keramische Körper 90 hat einen konischen Abschnitt 291, der sich zum unteren Ende des Körpers 90 hin verjüngt und bei zusammengebauter Vorrichtung fest sowie spielfrei im konischen Lochabschnitt 267 des Implantats sitzt. Der Körper 90 hat ferner einen im allgemeinen zylindrischen Abschnitt 292 der sich bei zusammengebauter Vorrichtung oberhalb des Implantats 1 befindet. Der Körper 90 der in Fig. 11 dargestellten Vorrichtung liegt im Gegensatz zum Körper 90 gemäss Fig. 8 nicht auf der Schulterfläche 22 auf, sondern wird von dieser umschlossen.

Der Bolzen 80 ragt wiederum in ein axiales, oben geschlossenes Loch 91 des Körpers 90 hinein und ist durch ein Bindemittel 120 mit diesem verbunden. Nach dem Einsetzen des Implantats in einen Knochen kann ein Zahnarzt die Einheit 122 in das Implantat einschrauben. Der konische Abschnitt 291 liegt dann spielfrei und fest an der Innenfläche des konischen Lochabschnitts 267 an und wird durch diese radial sowie auch axial abgestützt. Die aneinander anliegenden Konusflächen ergeben ferner eine Hemmung sowie Klemmwirkung, so dass die Einheit 122 sich praktisch nicht unbeabsichtigt von selbst lösen kann. Im übrigen könnte der konische Abschnitt 291 des Körpers 90 zusätzlich mit einem Bindemittel im Lochabschnitt 267 befestigt werden. Der zylindrische Abschnitt 292 des keramischen Körpers 90 kann nötigenfalls beschliffen werden, so dass er beispielsweise die in Fig. 11 strichpunktiert dargestellte Form erhält und der Bereich 105 weggeschliffen wird. Am konischen Abschnitt 292 kann zum Beispiel eine nicht gezeichnete, auf der Schulterfläche 22 aufliegende Krone befestigt werden.

Die zum Teil in Fig. 13 ersichtliche Vorrichtung besitzt ein Implantat 1. Dieses besteht ausschliesslich aus einem einstückigen metallischen Grundkörper 50. Dieser ist bis zu seinem oberen, zweiten Ende zylindrisch, kann jedoch eventuell noch ein nicht gezeichnetes Aussengewinde aufweisen. Das Implantat hat am oberen Ende eine ringförmige, ebene, zur Achse 3 rechtwinklige Schulterfläche 22 und besitzt keinen über die Schulterfläche hinaufragenden Kopf. Das axiale Sackloch 35 des Implantats hat eine vom Innenrand der Schulterfläche 22 gebildete Mündung, anschliessend an diese einen zylindrischen Lochabschnitt 37 und weiter unten ein Innengewinde 38. Der Durchmesser des zylindrischen Abschnitts 37 ist deutlich grösser als der maximale Durchmesser bzw. Nenndurchmesser des Innengewindes 38. Zwischen dem zylindrischen Abschnitt 37 und dem Innengewinde 38 ist ein Lochabschnitt 311 vorhanden, der entlang dem Umfang verteilte, nach innen ragende Vorsprünge und zwischen diesen vorhandene Zwischenräume besitzt, wobei die letzteren axiale Nuten bilden.

Die Vorrichtung gemäss Fig. 13 besitzt wiederum eine Einheit 122 mit einem metallischen Bolzen 80 und einem mit diesem durch ein Bindemittel 120 verbundenen, keramischen Körper 90. Der Bolzen 80 hat bei dieser Variante einen Gewindeabschnitt 82 und von diesem weg der Reihe nach einen ersten zylindrischen Bolzenabschnitt 321, einen zweiten zylindrischen Bolzenabschnitt 322 und einen dritten zylindrischen Bolzenabschnitt 323. Der zweite zylindrische Bolzenabschnitt 322 hat einen grösseren Durchmesser als die beiden anderen zylindrischen Abschnitte 321, 323. Der obere Bereich des zweiten zylindrischen Abschnitts 322 und der dritte zylindrische Abschnitt 323 sind mit Ringnuten 85 versehen.

Der in Fig. 13 ersichtliche und zudem separat in Fig. 14 dargestellte, keramische Körper 90 hat ein axiales, wiederum oben abgeschlossenes Loch 91. Dieses hat einen an seine Mündung anschliessenden, weiteren, zylindrischen Lochabschnitt 331 und einen engeren, zylindrischen Lochabschnitt 332. Der Ringnuten aufweisende Bereich des zylindrischen Abschnitts 322 und der zylindrische Abschnitt 323 des Bolzens sitzen mit höchstens kleinem, radialem Spiel im Lochabschnitt 331 bzw. 332 des keramischen Körpers 90 und sind durch das Bindemittel 120 mit dem Körper 90 verbunden. Der keramische Körper 90 liegt bei zusammengebauter Vorrichtung mit seiner ebenen, zur Achse 3 rechtwinkligen Auflagefläche 92 auf der Schulterfläche 22 des Implantats auf, wobei die beiden Flächen 22, 92 gleiche Aussendurchmesser und gleiche Innendurchmesser haben. Der an die Auflagefläche 92 anschliessende Abschnitt 331 des Körpers 90 hat eine im Axialschnitt leicht konkav gebogene, sich nach oben trompetenförmig erweiternde Umfangsfläche, die bei zusammengesetzter Vorrichtung mindestens annähern stetig an die zylindrische Umfangsfläche des Implantats 1 anschliesst. Das obere Ende des trompetenförmigen Abschnitts 335 ist über eine im Axialschnitt konkav gebogene und/oder konische Schulterfläche 336 mit einem sich nach oben verjüngenden, konischen Abschnitt 337 verbunden. Der letztere ist mit einigen Ausnehmungen 99 versehen.

Das Implantat 1 wird bei seiner Verwendung subgingival in einen Knochen 71 eingesetzt, so dass die Schulterfläche 22 sich ungefähr in der Höhe des Knochenkamms unterhalb des Weichgewebes 73 befindet, aber nach dem Aufschneiden des Weichgewebes von der Umgebung des Knochens her zugänglich ist. Nach dem Einheilen des Implantats wird der Bolzen 80 der Einheit 122 in das Implantat eingeschraubt. Der untere Teil des zweiten zylindrischen Bolzenabschnitts 322 wird dann radial annähernd spielfrei im zylindrischen Lochabaschnitt 37 des Implantats geführt und abgestützt, während der Bolzenabschnitt 321 den Abschnitt 311 des Lochs mit grossem Spiel und beispielsweise berührungsfrei durchdringt. Der keramische Körper 90 kann nötigenfalls wiederum beschliefen werden. Ferner kann beispielsweise eine nicht gezeichnete Krone derart am konischen Abschnitt 337 der Körpers 90 befestigt werden, dass die Krone auf der Schulterfläche 336 aufliegt.

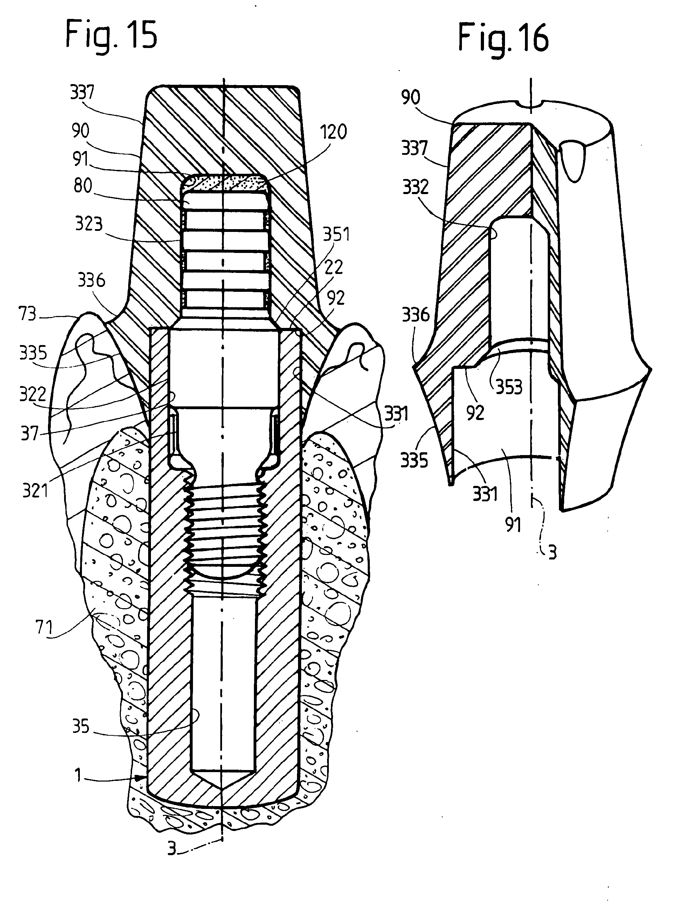

Das Implantat 1 der in Fig. 15 dargestellten Vorrichtung ist gleich ausgebildet wie das Implantat gemäss Fig. 13. Der Bolzen 80 der in Fig. 15 ersichtlichen Einheit 122 hat gleich wie der in Fig. 13 ersichtliche Bolzen einen Gewindeabschnitt 82 und drei zylindrische Bolzenabschnitte 321, 322, 323, wobei der zweite zylindrische Bolzenabschnitt 322 jedoch kürzer ist, keine Ringnuten aufweist und durch einen kurzen konischen Bolzenabschnitt 351 mit dem zylindrischen Abschnitt 323 verbunden ist. Der keramische Körper 90 der in Fig. 15 ersichtlichen Einheit 122 ist noch separat in Fig. 16 dargestellt und hat ein axiales Loch 91 mit zwei zylindrischen Lochabschnitten 331, 332. Zwischen dem an die Mündung des Lochs 91 anschliessenden, weiteren Lochabschnitt 331 und dem engeren Lochabschnitt 332 sind eine ringförmige, ebene, zur Achse 3 rechtwinklige Auflagefläche 92 und ein nach oben verjüngender, konischer Lochabschnitt 353 vorhanden. Der in den Figuren 15, 16 ersichtliche Körper 90 hat ähnlich wie der in den Figuren 13, 14 gezeichnete Körper einen sich nach oben trompetenförmig erweiternden Abschnitt 335, eine Schulterfläche 336 und einen konischen Abschnitt 337. Der Aussenrand der Schulterfläche 336 befindet sich ungefähr in der Höhe Auflagefläche 92. Der zylindrische Bolzenabschnitt 323 und der konische Bolzenabschnitt 351 des Bolzens sitzen im zylindrischen Lochabschnitt 332 bzw. im konischen Lochabschnitt 353 der Körpers 90, wobei der Bolzen wiederum durch ein Bindemittel 120 mit dem Körper 90 verbunden ist.

Das in Fig. 15 ersichtliche Implantat 1 ist transgingival eingesetzt, so dass sich die Schulterfläche 22 des Implantats oberhalb des Knochens 71 annähernd in der Höhe des Kamms des Weichgewebes 73 befindet. Wenn der Bolzen 80 in das Sackloch 35 des Implantats eingeschraubt ist, befindet sich der zweite zylindrische Bolzenabschnitt 322 vollständig im zylindrischen Lochabschnitt 37 des Implantats und ist ungefähr bündig mit der Mündung des Lochs 35. Der keramische Körper 90 liegt dann mit seiner Auflagefläche 92 auf der Implantat-Schulterfläche 22 auf. Der obere Endabschnitt des Implantats 1 sitzt mit höchstens kleinem, radialem Spiel im zylindrischen Lochabschnitt 331 des Körpers 90 und kann eventuell durch einen in dünner Schicht auftragbaren Klebstoff mit dem Körper 90 verbunden sein. Die im Axialschnitt leicht konkav gebogene Umfangsfläche des Abschnitts 335 des keramischen Körpers 90 geht am unteren Ende von diesem fast stufenlos in die zylindrische Umfangsfläche des Implantats über. Die an das Weichgewebe 73 angrenzende Fläche der Vorrichtung wird mindestens zum grössten Teil durch die Umfangsfläche des Abschnitts 335 des keramischen Körpers 90 gebildet.

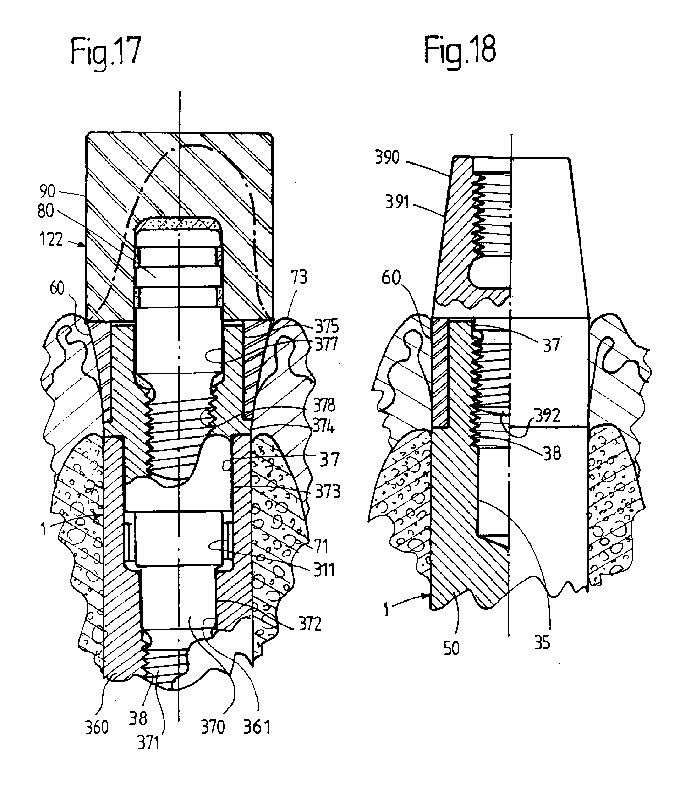

Die in Fig. 17 dargestellte Vorrichtung hat ein Implantat. 1 mit einem metallischen Grundkörper, der aus zwei einstückigen, lösbar miteinander verbundenen Teilen, nämlich einem im allgemeinen zylindrischen Körper 360 und einem in diesen eingeschraubten Zwischen-Bolzen 370 besteht. An diesem ist ein ringförmiger und/oder hülsenförmiger, keramischer Körper 60 gehalten. In den Zwischen-Bolzen 370 ist ein anderer Bolzen eingeschraubt, der wie der beispielsweise in den Figuren 3 und 4 ersichtliche Bolzen mit 80 bezeichnet ist. Am Bolzen 80 ist ein keramischer Körper befestigt, der kappenförmig sowie oben geschlossen und wie der kappenförmige, keramische Körper gemäss den Figuren 3 und 4 mit 90 bezeichnet ist. Der im allgemeinen zylindrische Körper 360 ist ähnlich ausgebildet wie der einstückige Grundkörper 50 so gemäss Fig. 13. Das Sackloch des Körpers 360 hat jedoch zwischen dem Innengewinde 38 und dem Vorsprünge sowie Zwischenräume aufweisenden Lochabschnitt 311 noch einen gewindelosen, zylindrischen Lochabschnitt 361, dessen Durchmesser gleich dem Nenndurchmesser des Innengewindes oder ein wenig grösser als dieser und kleiner als der Durchmesser des an die Mündung des Sacklochs 35 anschliessenden, zylindrischen Lochabschnitts 37 ist. Der Zwischenbolzen 370 hat einen in das Innengewinde 38 eingeschraubten Gewindeabschnitt 371, zwei zylindrische, in den Lochabschnitten 361 und 37 geführte Bolzenabschnitte 372 bzw. 373, einen Bund 374 und einen vom letzteren weg nach oben ragenden, zylindrischen Bolzenabschnitt 375. Der Bund 374 hat oben und unten eine ebene Ringfläche und liegt auf der ringförmigen Endfläche des Körpers 360 auf. Der Zwischen-Bolzen 370 ist mit einem in sein oberes Ende mündenden Sackloch 377 versehen, das ein Innengewinde 378 hat. Der keramische Körper 60 liegt bei der in Fig. 17 gezeichneten Variante auf dem Bund auf 373 auf und umschliesst den zylindrischen Bolzenabschnitt 375. Der Bolzen 80 ist mit seinem Gewindeteil in das Innengewinde 378 des Zwischen-Bolzens 370 eingeschraubt. Der hülsenförmige, keramische Körper 60 hat an seinem oberen Ende eine ebene Ringfläche, die sich zum Beispiel ein wenig oberhalb der ringförmigen Endfläche des Bolzens 370 befindet und als Schulterfläche des Implantats 1 angesehen werden kann. Der kappenförmige, unlösbar am Bolzen 80 befestigte und mit diesem zusammen eine Einheit 122 bildende, keramische Körper 90 liegt mit einer ebenen, ringförmige Auflagefläche auf der genannten Ringfläche des keramischen Körpers 60 auf und drückt diesen gegen den Bund 374. Der hülsenförmige, keramische Körper 60 kann bei dieser Variante eventuell nur auf den Zwischen-Bolzen 370 aufgesteckt sein und wird dann bei zusammengebauter Vorrichtung durch die Einheit 122 am Zwischen-Bolzen 370 festgehalten. Der keramische Körper 60 kann jedoch zum Beispiel durch eine Press-Verbindung und/oder ein Bindemittel unlösbar am Zwischen-Bolzen 370 befestigt sein. Der metallische Körper 360 des Implantats 1 ist subgingival eingesetzt, so dass das Weichgewebe an den keramischen Körper 60 und eventuell auch noch ein wenig an den keramischen Körper 90 sowie den Bund 324 angrenzt.

Die in Fig. 18 ersichtliche Vorrichtung besitzt ein im allgemeinen zylindrisches Implantat 1 mit einem einstückigen, metallischen Grundkörper 50 und einem an diesem befestigten, ring- und/oder hülsenförmigen, keramischen Körper 60. Das Sackloch 35 hat zwischen seiner Mündung und seinem Innengewinde 38 analog wie beim in Fig. 1 gezeichneten Grundkörper einen kurzen, zylindrischen Lochabschnitt 37, der mindestens gleich dem Nenndurchmesser bzw. maximalen Durchmesser des Innengewindes und beispielsweise ein wenig grösser als der Gewinde-Nenndurchmesser ist. Der metallische Grundkörper 50 und der keramische Körper 60 haben an ihren oberen Enden ebene ringförmige Endflächen, von denen sich diejenige des keramischen Körpers 60 zum Beispiel ein wenig oberhalb der Endfläche des Grundkörpers befindet und als Schulterfläche des Implantats dient. Die beiden ringförmigen Endflächen könnten jedoch auch bündig zueinander sein.

Die Vorrichtung gemäss Fig. 18 besitzt noch einen Sekundärteil oder ein Aufbauelement 390 mit einem Kopf 391 und einem Bolzen 392. Der Bolzen 392 hat einen in das Innengewinde 38 eingeschraubten Gewindeabschnitt annähernd spielfrei radial im Lochabschnitt 37 abgestützt ist. Der Kopf 391 liegt mit einer ringförmigen, ebenen Auflagefläche spaltfrei auf der oberen Endfläche des keramischen Körpers 60 auf. Dieser kann aufgesteckt und durch das Aufbauelement 390 am Grundkörper 50 festgehalten oder durch eine Press-Verbindung und/oder ein Bindemittel unlösbar am Grundkörper befestigt sein. Der Kopf 391 ist beispielsweise konisch und besitzt ein in sein oberes Ende mündendes Sackloch mit einem Innengewinde. Das Implantat 1 ist transgingival in einem Mund eines Patienten eingesetzt. Die Vorrichtung gemäss Fig. 18 dient zusammen mit mindestens einer anderen, gleichen Vorrichtung und/oder eventuell einem natürlichen Zahn zum Halten und/oder Bilden einer Stegkonstruktion, wobei ein nicht gezeichneter Steg am Kopf 391 befestigt werden kann.

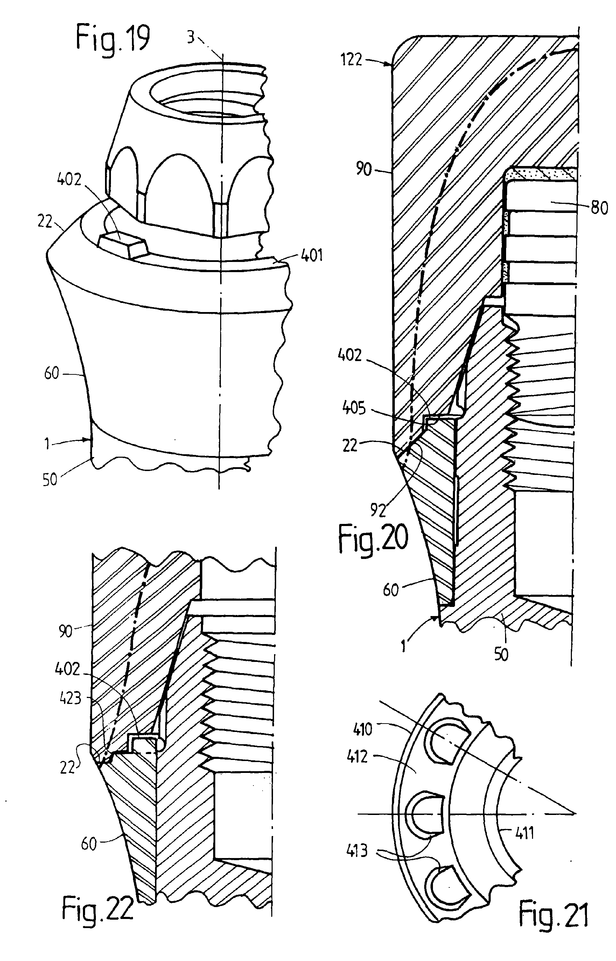

Das in den Figuren 19 und 20 dargestellte Implantat 1 ist ähnlich ausgebildet wie das Implantat 1 und besitzt einen einstückigen, metallischen Grundkörper 50 sowie einen an diesem befestigten, ring- und/oder hülsenförmigen, keramischen Körper 60. Dieser bildet wie beim Implantat gemäss Fig. 1 die konische Schulterfläche 22 des Implantats. Der keramische Körper 60 hat jedoch auf seiner Stirnseite beim oberen, inneren Rand der konischen Schulterfläche 22 noch eine relativ breite, ringförmige zum grössten Teil ebene Stirnfläche 401. Diese ist mit einem axial vorstehenden Vorsprung 402 oder Nocken 402 versehen, wobei eventuell mehrere gleichmässig entlang dem Umfang der Ringfläche um die Achse 3 herum verteilte Vorsprünge 402 vorhanden sein können.

An dem in den Figuren 19 und 20 ersichtlichen Implantat 1 kann zum Beispiel die in Fig. 20 gezeichnete Einheit 122 befestigt werden, die einen Bolzen 80 und einen an diesem befestigten, keramischen Körper 90 aufweist. Der Bolzen 80 und der keramische Körper 90 sind ähnlich wie in Fig. 3 ausgebildet. Der keramische Körper 90 liegt bei zusammengebauter Vorrichtung insbesondere mit einer ringförmigen, konischen Auflagefläche 92 auf der konischen Schulterfläche 22 auf. Der in Fig. 20 gezeichnete Körper 90 besitzt jedoch innerhalb der konischen Auflagefläche 92 eine ringförmige Kehle 405, in die bei zusammengebauter Vorrichtung der bzw. jeder Vorsprung 402 mit Spiel hineinragt. Die Kehle 405 ermöglicht, die Einheit 122 durch Drehen ohne Behinderung durch den Vorsprung 402 oder die Vorsprünge 402 am Implantat festzuschrauben.

Der teilweise in Fig. 21 ersichtliche, vorzugsweise metallische, beispielsweise aus Gold oder einer Goldlegierung bestehende, kappenförmige Körper 410 kann anstelle der in Fig. 20 gezeichneten Einheit 122 am Implantat gemäss den Figuren 19, 20 befestigt werden. Der Körper 410 ist ähnlich wie der in Fig. 5 ersichtliche Körper 190 ausgebildet und hat wie dieser ein durchgehendes axiales Loch 411, so dass er analog wie der Körper 190 mit einer Okklusalschraube am Implantat befestigt werden kann. Der Körper 410 hat eine ringförmige, im allgemeinen konische Auflagefläche 412, die mindestens zum Teil auf der konischen Schulterfläche 22 des Implantats 1 aufliegt, wenn der Körper 410 an diesem befestigt ist. Die Auflagefläche 412 ist mit mehreren - beispielsweise zwölf - gleichmässig entlang der Auflagefläche verteilten Ausnehmungen 413 versehen. Wenn der Körper 410 am Implantat gemäss Fig. 19 befestigt ist, ragt der bzw. jeder Vorsprung 402 in eine Ausnehmung 413 hinein und sichert den Körper 410 gegen Drehungen. Der Körper 410 kann also wahlweise in einer von mehreren Drehstellungen bezüglich des Implantats 1 drehfest positioniert werden.

Die in Fig. 22 gezeichnete Vorrichtung ist ähnlich ausgebildet wie die Vorrichtung gemäss Fig. 20. Der in Fig. 22 ersichtliche, keramische Körper 60 besitzt jedoch anstelle einer konischen Schulterfläche eine ebene, ringförmige Schulterfläche 22, an die innen eine ringförmige Stufe 423 mit einer steilen, leicht konischen oder zylindrischen Flanke und einer ebenen, mit mindestens einem Vorsprung 402 versehenen Ringfläche anschliesst. Der keramische Körper 90 ist derart ausgebildet, dass er mit einer ringförmigen, ebenen Auflagefläche spaltfrei auf der ebenen Schulterfläche 22 aufliegt.

Das in Fig. 23 dargestellte Implantat 1 hat eine ähnliche Umrissform wie das Implantat gemäss der Figuren 19 und 20, besitzt jedoch einen Grundkörper 50, der aus zwei ursprünglich separaten Teilen, nämlich einem Primärteil 431 und einem Sekundärteile 432 gebildet ist. Der letztere hat einen in ein Sackloch des Primärteils eingeschraubten Bolzen und einen aus dem Primärteil herausragenden Abschnitt, der den Kopf 7 des Implantats 1 bildet. Der am Primärteil 431 befestigte, keramische Körper 60 bildet die Schulterfläche 22 des Implantats und hat zwei oder mehr entlang seinem Umfang verteilte Vorsprünge 402 oder Nocken 402.

Das in Fig. 24 dargestellte Implantat hat wie das Implantat gemäss Fig. 23 einen aus einem Primärteil 431 und einem Sekundärteil 432 bestehenden, metallischen Grundkörper 50. Der am Primärteil 431 befestigte, keramische Körper 60 hat auf seiner Stirnseite anstelle von Vorsprüngen 402 mindestens eine Ausnehmung 433 und zum Beispiel zwei oder mehr entlang dem Umfang verteilte Ausnehmungen 433. Jede Ausnehmung 433 besteht aus einer zur Achse 3 radialen Nut. An dem gemäss Fig. 24 ausgebildeten Implantat kann wahlweise eine Einheit mit einem Bolzen und einem keramischen, nicht in die Ausnehmungen eingreifenden Körper oder ein metallischer, kappenförmiger Körper befestigt werden, der mindestens einen in eine Ausnehmung 433 eingreifenden Vorsprung hat und dadurch drehfest positioniert wird.

Es sei noch darauf hingewiesen, dass mindestens der äusserste Ringbereich der von den keramischen Körpern 60 gebildeten Schulterflächen 22 bei allen in den Figuren 19, 20, 22 bis 24 dargestellten Implantaten entlang dem ganzen Umfang lückenlos glatt und entweder konisch oder eben ist. Die an diesen Implantaten befestigten Körper können daher trotz der Vorsprünge oder Ausnehmungen entlang dem ganzen Umfang der Schulterflächen spaltfrei an diesen anliegen. Die Vorsprünge 402 und Ausnehmungen 433 der keramischen Körper 60 befinden sich auf einem zur Achse 3 koaxialen Ringbereich, der den Kopf des Implantats in axialer Projektion umschliesst. Die Vorsprünge 402 und Ausnehmungen 433 haben daher einen relativ grossen, radialen Abstand von der Achse 3. Dies trägt zu einer genauen Positionierung und stabilen Drehsicherung von Körpern bei, die an den Implantaten befestigt sind und mit den Vorsprüngen bzw. Ausnehmungen in Eingriff stehen.

Ferner kann auch ein an einem einteiligen oder zweiteiligen, metallischen Grundkörper befestigter, keramischer Körper mit einer ebenen, ringförmigen Schulterfläche mit mindestens einem Vorsprung oder mindestens einer Ausnehmung versehen werden. Die Vorsprünge bzw. Ausnehmungen können sich dann beispielsweise in radialer Richtung nur über den inneren Teil der Schulterfläche erstrecken, so dass die Schulterfläche aussen einen entlang dem ganzen Umfang zusammenhängenden, glatten, ebenen Abschnitt hat.

Die keramischen Körper 60 der Implantate gemäss den Figuren 19 bis 24 und der im vorangehenden Absatz beschriebenen Implantat-Varianten können - analog wie das Implantat gemäss Fig. 7 - mehrere identische, erste Vorsprünge oder Ausnehmungen und einen anders bemessenen, zweiten Vorsprung bzw. eine anders bemessene, zweite Ausnehmung haben. Es können zum Beispiel mehrere identische, erste Vorsprünge und ein schmälerer und/oder niedriger zweiter Vorsprung bzw. mehrere identische, erste Ausnehmungen und eine zweite, breitere und/oder tiefere Ausnehmung vorhanden sein. Die mit einer Schraube am Implantat befestigbaren Körper können dann derart ausgebildete, mit den Vorsprüngen und/oder Ausnehmungen der keramischen Körper zusammenwirkende Ausnehmungen und/oder Vorsprünge aufweisen, dass ein Implantat den an ihm befestigten Körper - abhängig von dessen Ausbildung - wahlweise in einer von mehreren Drehstellungen oder nur in einer einzigen Drehstellung drehfest positioniert.

Die anhand der Figuren 5 bis 24 beschriebenen Teile können - soweit bei der Beschreibung der entsprechenden Figuren nicht anderes geschrieben - jeweils ähnlich ausgebildet sein und ähnliche Eigenschaften aufweisen wie beim zuerst beschriebenen und/oder wie bei einem anderen vorher beschriebenen Ausführungsbeispiel.

Die Vorrichtungen können noch auf andere Arten geändert werden. Es können insbesondere Merkmale verschiedener Ausführungsbeispiele miteinander kombiniert werden.

Ein Bolzen 80 und das Loch 91 das am Bolzen befestigten, keramischen Körpers 90 können im Querschnitt zur Achse nichtrotationssymmetrische Abschnitte haben, die mit höchstens kleinem Spiel ineinander hineinpassen. Die genannten Abschnitte können zum Beispiel mehrkantförmig sein oder mindestens eine ebene Fläche haben, die zur Achse parallel ist oder mit dieser einen von 90° verschiedenen Winkel bildet. Dadurch wird der keramische Körper 90 unverdrehbar auf dem Bolzen positioniert und zusätzlich gegen Drehungen relativ zum Bolzen gesichert.

Die Verankerungspartie des Implantats kann sich ferner mindestens annähernd über ihrer ganzen Höhe zum unteren, ersten Ende des Implantats hin ähnlich wie eine natürliche Zahnwurzel verjüngen, aber beispielsweise noch ein Aussengewinde aufweisen, so dass das Implantat nach der Extraktion eines Zahns sofort in den Knochen eingesetzt werden kann.

Im übrigen können die in den verschiedenen Figuren gezeichneten Implantate auch in Kombination mit anderen Aufbauelementen bzw. Suprakonstruktionen und sonstigen Teilen verwendet werden, die beispielsweise zur Bildung von Einzelzähnen, Brücken und Prothesen mit mehreren künstlichen Zähnen dienen.

## Patentansprüche

1. Vorrichtung zum Halten und/oder Bilden eines Zahnersatzes, mit einem Implantat (1), das einen metallischen, zum mindestens teilweisen Verankern in einem Knochen (71) bestimmten, ein Loch (35) aufweisenden Grundkörper (50) aufweist, und mit einem keramischen, ein Loch (91) aufweisenden Körper (90), der mit einem metallischen Bolzen (80) oder einer einen Kopf (183) aufweisenden Schraube (180) am Grundkörper (50) befestigbar ist, wobei der Bolzen (80) bzw. die Schraube (180) im Loch (38) des Grundkörpers (50) befestigbar ist, **dadurch gekennzeichnet, dass** das Loch (91) des keramischen Körpers (90) ein Sackloch ist und ein dem Grundkörper (90) abgewandtes, durch keramisches Material des keramischen Körpers (90) abgeschlossenes Ende hat und der Bolzen (80) in das Loch (91) des keramischen Körpers (90) hineinragt und starr mit diesem verbunden ist oder dass der Kopf (183) der Schraube (180) auf einer Auflagefläche des keramischen Körpers (90) aufliegt.

2. Vorrichtung nach Anspruch 1, **dadurch gekennzeichnet, dass** das mindestens zum Teil vom metallischen Grundkörper (50) gebildete Implantat (1) eine Achse (3) und eine mit dieser einen Winkel bildende, ringförmige Schulterfläche (22) hat und dass der mit einem Bolzen (80) oder mit einer Schraube (180) am Implantat (1) befestigbare, keramische Körper (90) bei zusammengesetzter Vorrichtung mit einer ringförmigen Auflagefläche (92) auf der Schulterfläche (22) des Implantats (1) aufliegt oder einen im Loch (35) des Grundkörpers (50) sitzenden Abschnitt (291) hat.

3. Vorrichtung nach Anspruch 2, **dadurch gekennzeichnet, dass** das Implantat (1) ein erstes zum tiefsten Einsetzen in den Knochen (71) bestimmtes Ende (8) und ein zweites Ende (9) hat und dass die Schulterfläche (22) des Implantats (1) mindestens zum Teil konisch und nach aussen zum ersten Ende (8) des Implantats (1) hin geneigt ist und die Auflagefläche (92) des am Implantat (1) befestigbaren, keramischen Körper (90) konisch ist und auf der mindestens zum Teil konisch ausgebildeten Schulterfläche (22) des Implantats (1) aufliegt oder dass ein Abschnitt (267) des Lochs (35) des Implantats (1) den im Loch (35) sitzenden Abschnitt (291) des am Implantat (1) befestigbaren, keramischen Körpers (90) mindestens radial abstützt oder dass die Schulterfläche (22) mindestens zum Teil eben ist und der am Implantat (1) befestigbare Körper (90) mit einer ebenen, ringförmigen Auflagefläche (92) auf der ebenen Schulterfläche (22) bzw. einem ebenen Teil von dieser aufliegt und durch eine zylindrische oder konische Fläche des Implantats (1) mindestens annähernd radial spielfrei abgestützt ist.

4. Vorrichtung nach Anspruch 2 oder 3, **dadurch gekennzeichnet, dass** das Implantat (1) einen von der Schulterfläche (22) wegragenden Kopf (7) hat, der den am Implantat befestigbaren, keramischen Körper (90), wenn dieser bei zusammengebauter Vorrichtung auf der Schulterfläche (22) aufliegt, bei mindestens einer vom Loch (91) des am Implantat (1) befestigbaren, keramischen Körpers (90) gebildeten Innenfläche (93, 94) mit höchstens kleinem, radialem Spiel abstützt.

5. Vorrichtung nach Ansprüche 2 bis 4, **dadurch gekennzeichnet, dass** das Loch (35) des Implantats (1) einen konischen Abschnitt (267) hat, in dem ein konischer Abschnitt (291) des am Implantat (1) befestigbaren, keramischen Körpers (90) spielfrei sitzt.

6. Vorrichtung nach einem der Ansprüche 2, 3 oder 5, **dadurch gekennzeichnet, dass** die ringförmige Schulterfläche (22) den am Implantat (1) befestigbaren, keramischen Körper (90) bei der Mündung des Lochs (35) des Implantats (1) in einer axialen Projektion umschliesst und eine freie Auflage für einen Teil eines Aufbauelements (77), zum Beispiel für eine Krone (110) oder einen Teil einer Brücke oder einen Teil einer mehrere künstliche Zähne aufweisenden Prothese bildet.

7. Vorrichtung nach Anspruch 2 oder 3, **dadurch gekennzeichnet, dass** der am Implantat (1) befestigbare, keramische Körper (90) eine ringförmige Schulterfläche (336) aufweist.

8. Vorrichtung nach einem der Ansprüche 2 bis 7, **dadurch gekennzeichnet, dass** das Implantat (1) einen den metallischen Grundkörper (50) umschliessenden, ringförmigen, durch eine Press-Verbindung und/oder ein Bindemittel und/oder eine Hartlöt-Verbindung am Grundkörper (50) im Wesentlichen unlösbar befestigten, keramischen Körper (60) oder einen auf den Grundkörper (50) aufgebrachten Überzug (260) aufweist.

9. Vorrichtung nach einem der Ansprüche 1 bis 8 **dadurch gekennzeichnet, dass** der mit einem Bolzen (80) am Implantat (1) befestigbare, keramische Körper (90) durch eine Press-Verbindung und/oder ein Bindemittel (120) und/oder eine Hartlöt-Verbindung im Wesentlichen unlösbar mit dem Bolzen (80) verbunden ist.

10. Vorrichtung nach einem der Ansprüche 1 bis 9, **dadurch gekennzeichnet, dass** der am Implantat (1) befestigbare, keramische Körper (90) zum Eingreifen in einen Teil eines Aufbauelements (77) ausgebildet ist, wobei dieser Teil des Aufbauelements (77) zum Beispiel eine Krone (110) ist oder zu einer Brücke oder einer mehrere künstlichen Zähne aufweisenden Prothese gehört und wobei das Implantat (1) zum Beispiel innerhalb der ringförmigen Schulterfläche (22) mindestens einen Vorsprung (402) oder mindestens eine Ausnehmung (433) hat.
